# EUROPÄISCHE PATENTSCHRIFT

(11) **EP 4 383 026 B1**
(45) Veröffentlichungstag und Bekanntmachung des Hinweises auf die Patenterteilung: **30.09.2026**
(21) Anmeldenummer: 24164643.9
(22) Anmeldetag: 25.02.2020
(51) Int. Cl.: G01B 21/04, G05B 19/401

(54) **OPTISCHES ERFASSEN EINER AUFNAHMEEINRICHTUNG FÜR EINWECHSELBARE KOMPONENTEN EINES KOORDINATENMESSGERÄTS**
OPTICAL DETECTION OF A RECEPTACLE DEVICE FOR INTERCHANGEABLE COMPONENTS OF A COORDINATE MEASURING DEVICE
DÉTECTION OPTIQUE D'UN DISPOSITIF DE RÉCEPTION POUR COMPOSANTS INTERCHANGEABLES D'UN APPAREIL DE MESURE DE COORDONNÉES

(43) Veröffentlichungstag der Anmeldung: 12.06.2024
(62) Dokumentnummer(n) der früheren Anmeldung(en) nach Art. 76 EPÜ: 20159253.2 / 3 872 447
(73) Patentinhaber: Carl Zeiss Industrielle Messtechnik GmbH, 73447 Oberkochen (DE)
(72) Erfinder: Ritter, Markus, 89520 Heidenheim (DE)
(74) Vertreter: Ramrath, Lukas

(56) Entgegenhaltungen:
- EP-A1- 2 930 462
- EP-A1- 3 054 265
- EP-A1- 3 104 118
- DE-A1- 102007 013 633
- DE-A1- 102014 202 977
- DE-A1- 102015 119 440
- DE-A1- 102015 212 265

## Beschreibung

Die Erfindung betrifft ein Verfahren und eine Anordnung zum sensorischen und insbesondere optischen Erfassen einer Aufnahmeeinrichtung für einwechselbare Komponenten eines Koordinatenmessgeräts.

Koordinatenmessgeräte sind in verschiedenster Form aus dem Stand der Technik bekannt. Sie dienen allgemein dazu, räumliche Koordinaten von Messobjekten wie zum Beispiel von industriellen Werkstücken zu erfassen. Dies kann insbesondere durch taktiles Antasten oder optisches Erfassen eines Messobjekts erfolgen. Beispiele für Koordinatenmessgeräte mit bewegbaren Messsensoren sind Koordinatenmessgeräte nach Portalbauweise oder Ständerbauweise.

Um den Arbeitsraum zu erhöhen, innerhalb dem das Messobjekt vermessen werden kann, sind der Messsensor und das Messobjekt in der Regel relativ zueinander bewegbar. Hierfür umfasst das Koordinatenmessgerät eine Kinematik und genauer gesagt wenigstens eine bewegbare Maschinenachse. Beispielsweise kann das Messobjekt relativ zu einem feststehenden Messsensor bewegt werden, zum Beispiel mittels eines Drehtisches. Alternativ oder zusätzlich kann der Messsensor relativ zu dem Messobjekt bewegt werden, zum Beispiel mittels Rotationsachsen und/oder Linearachsen.

Allgemein können Koordinatenmessgeräte (auch im Rahmen der vorliegenden Erfindung) wenigstens zwei in einer kinematischen Kette aufeinanderfolgende Bewegungsachsen aufweisen, bevorzugt wenigstens zwei oder wenigstens drei Linearachsen.

Typischerweise umfassen die Koordinatenmessgeräte zum Vermessen des Messobjekts ferner einen Messsensor, beispielsweise einen Messsensor mit einem taktilen Messtaster oder einen optischen Messsensor. Letzterer kann beispielsweise ein Lasersensor (insbesondere Triangulationssensor), ein Streifenlichtsensor oder ein Weißlichtsensor sein. Der taktile Messtaster kann mit einem sogenannten Sensorkopf zusammenwirken, der sensorische und/oder signalgebende Einheiten umfasst, um nach Maßgabe erfasster Messtasterbewegungen Messsignale zu erzeugen.

Im Rahmen der vorliegenden Offenbarung kann unter einem Messsensor insbesondere eine Kombination eines solchen Sensorkopfes mit einem Taststift oder anderweitigen taktilen Messtaster (zum Beispiel einer Scheibe) verstanden werden. Der Sensorkopf und der Messtaster können dabei jeweils Komponenten des Messsensors bilden.

Um die Einsatzflexibilität von Koordinatenmessgeräten zu erhöhen, ist es bekannt, je nach Messaufgabe bestimmte Komponenten selektiv mit dem Koordinatenmessgerät zu verbinden und insbesondere bedarfsweise oder, mit anderen Worten, messaufgabenspezifisch an diesem anzuordnen. Dies erfolgt bevorzugt derart, dass die Komponente gemeinsam mit dem Koordinatenmessgerät relativ zu einem zu vermessenden Messobjekt bewegbar ist.

Ein solches selektives und/oder bedarfsweises Anordnen kann auch als Einwechseln der Komponente verstanden werden. Wird in diesem Zusammenhang eine zuvor am Koordinatenmessgerät angeordnete Komponente von diesem entfernt, kann der Vorgang als Auswechseln der entsprechenden Komponente bezeichnet werden.

Typische einwechselbare Komponenten sind (zum Beispiel optisch oder taktile) Messsensoren oder zumindest einzelne Komponenten von Messsensoren, wie die oben erwähnten Sensorköpfe, Messtaster oder Taststifte. Ein weiteres Beispiel sind sogenannte Temperaturtaster, welche zur Erfassung der Werkstücktemperatur genutzt werden, insbesondere zu kompensationszwecken (d.h. zur Messwertgenerierung unter Kompensation von Temperatureinflüssen.

Verbindungen zwischen dem Koordinatenmessgerät und den einwechselbaren Komponenten können mittels Schnittstellen und insbesondere sogenannte Sensorschnittstellen erfolgen. Im Rahmen der vorliegenden Offenbarung kann hierunter insbesondere eine Schnittstelle für taktile Taster oder Taststifte an zum Beispiel einem Sensorkopf verstanden werden als auch eine Schnittstelle an zum Beispiel einer Pinole des Koordinatenmessgeräts zum Verbinden mit einem Sensorkopf.

Zum Durchführen des Wechselvorgangs können in einem Arbeitsraum des Koordinatenmessgeräts Aufnahmevorrichtungen vorgesehen sein, in denen einwechselbaren Komponenten gelagert werden können. Beispielsweise kann das Koordinatenmessgerät eine gekoppelte Komponente in der Aufnahmevorrichtung ablegen bzw. an diese abgeben und eine neue Komponente aus der Aufnahmevorrichtung zwecks Kopplung bzw. Einwechseln entnehmen.

Derartige Aufnahmevorrichtungen werden oftmals auch als Magazin, Ablage oder Halter bezeichnet. Eine Aufnahmevorrichtung kann jede Art von Einrichtung sein, die zumindest eine einwechselbare Komponente und insbesondere einen Messsensor sichern, halten und/oder aufnehmen kann. Dabei ist es nicht zwingend erforderlich (wenn auch möglich), dass die Aufnahmevorrichtung den Messsensor festklemmt und/oder verriegelt.

Damit das geschilderte Auswechseln von mit dem Koordinatenmessgerät gekoppelten Komponenten schnell und präzise während des Messbetriebes ausgeführt werden kann, sollte die Steuerung des Koordinatenmessgeräts den Ort, die Orientierung (Ausrichtung) und/oder den Typ des Halters kennen. Die zum Auswechseln eines Messsensors abzuarbeitenden Bewegungsroutinen können sich bei verschiedenen Aufnahmevorrichtungen erheblich voneinander unterscheiden. In jedem Fall ist es hilfreich oder sogar erforderlich, dass das Koordinatenmessgerät und insbesondere dessen Sensorschnittstelle die Aufnahmevorrichtung möglichst genau anfährt, wenn eine dort aufgenommene Komponente angekoppelt oder eine gekoppelte Komponente abgelegt werden soll. Bevorzugt wird außerdem, dass der Steuerung Informationen zu einer räumlichen Erstreckung der Aufnahmevorrichtung und insbesondere von Teilen abseits eigentlicher Aufnahmebereiche für die Komponenten vorliegen, um Kollisionen mit der Aufnahmevorrichtung zu vermeiden.

Wenn eine oder mehrere Aufnahmevorrichtungen im Arbeitsraum eines Koordinatenmessgeräts angeordnet werden, wird vor Aufnahme des Messbetriebes daher oftmals zunächst ermittelt, welche Abmessungen und Form die Aufnahmevorrichtung hat. Ferner wird typischerweise ermittelt, an welcher Position sich die Aufnahmevorrichtung befindet und wie sie orientiert ist. Bisher erfolgt dies oftmals größtenteils manuell und erfordert einen erheblichen Zeitaufwand während des Einrichten eines Koordinatenmessgeräts (also während des Vorbereitens/Einrichtens von dessen eigentlichen wertschöpfenden Messbetrieb).

Da es sich bei den Aufnahmevorrichtungen meist um verhältnismäßig komplex geformte Objekte handelt, ist das (meist manuelle) Vermessen der Aufnahmevorrichtungen oftmals ein zeitaufwendiger Vorgang, für den vorrichtungsspezifische Messstrategien entwickelt werden müssen. Dies ist aufwendig und kann viel Erfahrung voraussetzen.

Geeignete Messstrategien sind aber nicht immer allein von der Aufnahmevorrichtung selbst abhängig, sondern auch von deren Ort und von deren Orientierung, insbesondere relativ zu einer Kinematik des Koordinatenmessgeräts. Beispielsweise kann eine an sich vorteilhafte Messstrategie nicht angewandt werden, wenn die Aufnahmevorrichtung unmittelbar neben einem anderen Gegenstand angeordnet wird und daher ein Anfahren der Aufnahmevorrichtung nicht aus beliebigen Richtungen möglich ist. Eine vorhandene Messstrategie muss daher unter Umständen angepasst oder ersetzt werden, was Zeit und Erfahrung erfordert sowie fehleranfällig ist.

Weiter erfordern bekannte Messstrategien aber in der Regel, dass die Aufnahmevorrichtung durch einen Messsensor des Koordinatenmessgeräts vermessen wird, der auch zur Vermessung eigentlicher Messobjekte verwendet wird (also zur eigentlichen Koordinatenermittlung von Messobjekten). Dies kann das Ausführen zeitaufwendiger Relativbewegungen von Koordinatenmessgerät bzw. Messsensor und Aufnahmevorrichtung erfordern, damit Letztere typischerweise an mehreren Orten erfasst werden kann.

Aus der DE 11 2008 000 154 B4 ist ein Verfahren bekannt, bei dem Aufnahmevorrichtungen nur in bestimmten Bereichen und genauer gesagt nur ein Teil mit einem individuellen Formmerkmal (zum Beispiel eine Art dreidimensionalen Marker) mit einem Messsensor des Koordinatenmessgeräts selbst angetastet wird. Dies erfordert das Ausbilden der Aufnahmevorrichtung mit entsprechenden Formmerkmalen, was die Kosten erhöht und die Anwendbarkeit auf entsprechend ausgebildete Aufnahmevorrichtungen begrenzt.

Zudem ist das Erfassen der Aufnahmevorrichtung durch das Koordinatenmessgerät und insbesondere einem daran angeordneten Messsensor aufgrund der erforderlichen Anzahl von Relativbewegungen und Antastvorgängen zeitintensiv und aufwendig.

Die DE 10 2007 013 633 A1 offenbart die Vorbereitung eines Messbetriebes eines Koordinatenmessgeräts, wobei ein Halter zum Halten zumindest eines Mess-Sensors vorgesehen ist. Bei dem Mess-Sensor handelt es sich insbesondere um einen Taster zum mechanischen Abtasten eines Messobjekts.

Die DE 10 2014 202 977 A1 offenbart ein Verfahren zum Bestimmen von Koordinaten eines Werkstücks unter Verwendung eines Koordinatenmessgeräts.

Die DE 10 2015 212 265 A1 offenbart eine Komponente zum Einbau in eine Maschine oder ein Messgerät, ein Koordinatenmessgerät, das eine solche Komponente aufweist, ein Verfahren zur Ermittlung von Daten einer solchen Komponente und ein Verfahren zum Betrieb eines Koordinatenmessgeräts, bei dem eine solche Komponente verwendet wird.

Die DE 10 2015 119 440 A1 offenbart ein Verfahren und Vorrichtungen zur Erkennung eines oder mehrerer in einem Koordinatenmessgerät vorhandenen, insbesondere an einer Sensorbasis oder in einer Wechselstation angeordneten austauschbaren Komponenten wie einem Sensorkopf.

Die EP 2 930 462 A1 offenbart ein Verfahren zur Erfassung von Informationen über eine Sensorkonfiguration eines Koordinatenmessgerätes mit Hilfe einer Kamera und einer Datenbank mit Referenzdaten, wobei Bilder der Sensorkonfiguration aufgenommen und verarbeitet werden.

Die EP 3 054 265 A1 offenbart ein Koordinatenmessgerät, umfassend einen Träger als Trag- und Positionierstruktur für einen Endeffektor als Zielobjekt, wobei der Endeffektor in mindestens drei, insbesondere in bis zu sechs Freiheitsgraden beweglich und durch den Träger positionierbar ist; einen stationären Messtisch als Träger für ein mögliches Zielobjekt; und eine Steuereinheit, die die Bewegung des Endeffektors durch den Träger steuert.

Eine Aufgabe der vorliegenden Erfindung ist daher, das Einrichten eines Koordinatenmessgeräts für den Messbetrieb unter Berücksichtigung vorhandener Aufnahmevorrichtungen zu vereinfachen. Insbesondere soll das Ermitteln relevanter Eigenschaften der Aufnahmevorrichtungen, wie Position, Orientierung, Abmessung und/oder Art, vereinfacht werden.

Diese Aufgabe wird durch ein Verfahren und eine Anordnung gemäß den beigefügten unabhängigen Ansprüchen gelöst. Vorteilhafte Weiterbildungen sind in den abhängigen Ansprüchen angegeben. Die in der einleitenden Beschreibung erwähnten Merkmale können einzeln oder in beliebiger Kombination auch bei der vorliegend offenbarten Lösung vorgesehen sein, sofern nicht anders angegeben oder ersichtlich.

Allgemein sieht die vorliegende Lösung vor, eine Aufnahmevorrichtung nicht nur teilweise und insbesondere nicht an vorbestimmten Formmerkmalen zu erfassen, sondern stattdessen großflächig und bevorzugt vollständig zu erfassen. Dies erfolgt bevorzugt im Rahmen eines Erfassungsvorgangs, bei dem eine oder mehrere zweidimensionale Bildaufnahmen und/oder eine oder mehrere dreidimensionale Erfassungen der Aufnahmevorrichtung in kurzer Zeitdauer ausgeführt werden.

Ermöglicht wird diese vergleichsweise schnelle und aufwandsarme Erfassung durch wenigstens einen optischen Überwachungssensor. Dieser kann relativ zu dem Koordinatenmessgerät unbeweglich sein. Vorzugsweise weist er einen vergleichsweise großen Erfassungsbereich auf (insbesondere größer als die Aufnahmevorrichtung). Relativbewegungen zwischen Überwachungssensor und Aufnahmevorrichtung können somit reduziert werden oder sogar entfallen.

Auf diese Weise wird die Messstrategie zum Erfassen relevanter Eigenschaften der Aufnahmevorrichtung und insbesondere einer Position oder Orientierung hiervon gegenüber bisherigen Lösungen vereinfacht und insbesondere verkürzt. Insbesondere kann die Aufnahmevorrichtung automatisch oder, mit anderen Worten, benutzerautonom erfasst werden und können auch hiervon relevante Eigenschaften automatisch anhand der Erfassung und insbesondere hierbei erzeugter (Bild-) Daten ermittelt werden.

Anschließend kann auch die Durchführung eines Komponentenwechselvorgangs automatisch unter Berücksichtigung dieser Eigenschaften durchgeführt werden.

Insbesondere können der vorstehenden aber auch nachstehenden Verfahrensmaßnahmen, Schritte und Funktionen computergestützt ausgeführt werden, insbesondere mittels einer nachstehend erläuterten Steueranordnung. Allgemein kann es sich also um ein zumindest teilautomatisches Verfahren handeln, das von einem Bediener zum Beispiel lediglich initiiert und/oder (abschließend oder nach ausgeführten Zwischenschritten) verifiziert wird.

Es ist aber auch möglich, dass ein Teil der Maßnahmen automatisch bzw. computergestützt ausgeführt werden, weitere hierin geschilderten Maßnahmen aber manuell. Dies kann zum Beispiel auf Ausführungsformen zutreffen, bei denen mittels Datenbanken eine Vorauswahl potenziell zutreffender Eigenschaften einer Aufnahmevorrichtung automatisch ermittelt werden und der Benutzer aufgefordert wird, eine finale Auswahl zu treffen. Auch im Rahmen einer (bevorzugt computergestützten) Erkennung der Aufnahmevorrichtung auf Basis der Arbeitsraumerfassung können vergleichbare endgültige Auswahlen und/oder Bestätigungen bezüglich infrage kommender Aufnahmevorrichtungen oder Eigenschaften manuell getroffen werden.

Insbesondere schlägt die Erfindung ein Verfahren zum Betreiben eines Koordinatenmessgeräts und insbesondere eines Einrichtens hiervon und/oder Betreibens während eines Einrichtbetriebs vor, wobei eine Aufnahmevorrichtung zur (insbesondere mechanischen und/oder lagernden und/oder haltenden) Aufnahme wenigstens einer einwechselbaren Komponente des Koordinatenmessgeräts bereitgestellt ist, insbesondere für einen Messsensor oder eine Messsensorkomponente (zum Beispiel einen Sensorkopf und/oder einen Messtaster/Taststift), und das Verfahren aufweist:
- (insbesondere wenigstens einmaliges) Erfassen eines zumindest überwiegenden Teils der Aufnahmevorrichtung mit einem optischen Überwachungssensor, der bevorzugt verschieden von einem für eine Werkstückvermessung verwendeten (insbesondere auswechselbaren) Messsensor des Koordinatenmessgeräts ist;
- Ermitteln wenigstens einer vorbestimmten Eigenschaft der Aufnahmevorrichtung auf Basis der optischen Erfassung;
- Durchführen eines Komponentenwechselvorgangs (also eines Ablegens und/oder Aufnehmen einer Komponente aus der bzw. in die Aufnahmevorrichtung) und insbesondere eines Messsensorwechsels unter Berücksichtigung der ermittelten Eigenschaft.

Das Erfassen kann auch als Abbilden bezeichnet werden bzw. mit einem solchen einhergehen. Insbesondere kann im Rahmen des Erfassens wenigstens eine Bilddatei und/oder wenigstens eine Abbildung des erfassten Teils der Aufnahmevorrichtung und/oder eines Teils des Arbeitsraums des Koordinatenmessgeräts mit der darin angeordneten Aufnahmevorrichtung erzeugt werden und/oder kann dieser Teil optisch aufgezeichnet werden. Insbesondere kann im Rahmen des Erfassens wenigstens eine Bilddatei oder wenigstens ein 3D-Datensatz erzeugt werden.

Allgemein kann die Erfassung zweidimensional erfolgen (2D-Erfassung), können also zweidimensionale Abbildungen, Messwerte oder Koordinaten der Aufnahmevorrichtung ermittelt werden. Es ist aber auch möglich, eine dreidimensionale Erfassung (3D-Erfassung) durchzuführen, insbesondere unter Erfassung von Tiefen- oder Höheninformationen zum Beispiel relativ zu einer Messtischoberfläche. Dies kann mit einer Mehrzahl von Überwachungssensoren erfolgen oder aber mit einem einzelnen 3D-Überwachungsensor, wie z.B. einer Time-of-Flight Kamera.

Insbesondere können auch Erfassungen aus mehreren Richtungen oder Blickwinkeln erfolgen (zum Beispiel mit mehreren Überwachungssensoren oder wenigstens einem bewegbaren Überwachungssensor). Eine Mehrzahl hiervon erfasster Bilder kann dann zum Erzeugen dreidimensionaler Daten verwendet werden (zum Beispiel bei nachstehend geschilderten stereoskopischen Verfahren) und/oder zum Auffinden vergleichbarer Aufnahmevorrichtungen in einer nachstehend geschilderten Datenbank.

Sofern hierin von Maßnahmen gesprochen wird, die auf Basis der Erfassung durchgeführt werden, kann dies gleichbedeutend damit sein, dass die Maßnahmen auf Basis einer auf Grundlage der Erfassung erzeugten Bilddatei, Abbildung oder Aufzeichnung oder auf Basis eines erfassten 3D-Datensatzes durchgeführt werden. Insbesondere kann dies umfassen oder bedeuten, dass eine auf Basis der Erfassung erzeugte Bilddatei, Abbildung oder Aufzeichnung oder ein 3D-Datensatz zum Durchführen einer jeweiligen Maßnahme analysiert, ausgewertet oder allgemein verarbeitet wird.

Ein erfasster Teil (bzw. Anteil) der Aufnahmevorrichtung kann wenigstens die Hälfte oder wenigstens drei Viertel der Aufnahmevorrichtung umfassen (zum Beispiel bezogen auf dessen Volumen oder Längserstreckung). Bevorzugt wird die Aufnahmevorrichtung vollständig erfasst bzw. abgebildet.

Allgemein kann der Erfassungsbereich des Überwachungssensors zumindest die Hälfte oder wenigstens drei Viertel des Arbeitsraums des Koordinatenmessgeräts erfassen, wobei der Arbeitsraum durch sämtliche Positionen aufgespannt wird, an dem ein Messsensor zur Vornahme von Messungen von dem Koordinatenmessgerät positionierbar ist. Bevorzugt ist der Erfassungsbereich derart bemessen, dass eine vollständige Arbeitsfläche und/oder ein Messtisch (bzw. dessen Oberfläche) des Koordinatenmessgeräts erfassbar ist. Ein Überwachungssensor mit einem entsprechend großen Erfassungsbereich ermöglicht eine schnelle Erfassung eines relevanten Teils des Arbeitsvolumens mit wenigen Erfassungsvorgängen oder auch mit lediglich einer einzigen Bildaufnahme unter großflächiger Abbildung der Aufnahmevorrichtung.

Der Überwachungssensor kann eine Kamera sein, insbesondere eine Digitalkamera. Das Erfassen kann das Belichten eines Kamerasensors (zum Beispiel eines CCD- oder CMOS-Sensors) umfassen. Darauf basierend können die erwähnten Bilddateien oder Abbildungen erzeugt werden, die zum Beispiel Pixelwertmatrizen umfassen bzw. definieren können. Alternativ kann der Überwachungssensor zum Beispiel ein optischer Abstandsmesssensor sein, insbesondere ein Triangulationssensor, eine Time-of-Flight-Kamera oder ein Streifenlichtsensor.

Der Überwachungssensor kann von oder aus dem Arbeitsraum reflektiertes Umgebungslicht und/oder in den Arbeitsraum gesondert eingestrahltes Licht, z.B. Licht mit einem definierten Wellenlängenspektrum, einer definierten Polarisation oder dergleichen, optisch erfassen. Auf diese Weise kann die erzielbare Erfassungsgenauigkeit erhöht werden.

Der Überwachungssensor kann statisch oder beweglich sein. Allgemein kann der Überwachungssensor und genauer gesagt ein Erfassungsbereich hiervon auf eine Arbeitsfläche oder, anders ausgedrückt, einen Messtisch des Koordinatenmessgeräts gerichtet sein bzw. diese(n) erfassen. Ist eine Mehrzahl von Überwachungssensoren vorgesehen, können diese voneinander beanstandet sein, optional aber sich überschneidende Erfassungsbereiche aufweisen.

Insbesondere kann jeglicher Überwachungssensor oberhalb der Arbeitsfläche bzw. des Messtisches angeordnet und diese(m) zugewandt und/oder auf diese(n) ausgerichtet sein. Beispielsweise kann ein Überwachungssensor an einem relativ zur Arbeitsfläche oder Messtisch stillstehenden Abschnitt des Koordinatenmessgeräts angeordnet sein.

Alternativ kann der Überwachungssensor zum Beispiel an einem beweglichen Teil des Koordinatenmessgeräts angeordnet sein, beispielsweise an einer Pinole und/oder einer Bewegungsachse des Koordinatenmessgeräts.

Ein beweglicher Überwachungssensor kann mit einem geringeren Erfassungsbereich als ein statischer Sensor realisiert sein, wobei dieser Erfassungsbereich zum Beispiel weniger als die Hälfte oder aber auch maximal ein Drittel des Arbeitsraums und/oder der Arbeitsfläche umfassen kann. Dies kann mit reduzierten Kosten einhergehen. Durch Durchführen mehrerer Bildaufnahmen oder Erfassungsvorgänge bei unterschiedlichen Positionierungen des Überwachungssensors kann der insgesamt erfasste Teil des Arbeitsraums vergrößert werden.

Der Überwachungssensor kann eine nicht-telezentrische Optik umfassen, insbesondere ein nicht-telezentrisches Objektiv. Hierdurch kann die Baugröße und können die Kosten reduziert werden. Andererseits ist der Überwachungssensor vorzugsweise in einem Bezugskoordinatensystem kalibriert, insbesondere in einem Maschinenkoordinatensystem (oder auch Basiskoordinatensystem). Auf diese Weise können Orte oder Pixel in aufgenommenen Bildern oder in Datensätzen Orten im Maschinenkoordinatensystem zugeordnet werden.

Es können verschiedene Vorrichtungen zur Vermeidung von optischen Störeinflüssen vorgesehen sein. Beispielsweise kann der Überwachungssensor einen Polarisationsfilter umfassen, insbesondere um eine bestimmte eingestrahlte (Mess-) Strahlung zu erfassen und/oder hiervon abweichende Strahlung herauszufiltern. Alternativ oder zusätzlich kann der Kamerasensor ein farbsensitiver Sensor sein, der nur ein bestimmtes Wellenlängenspektrum an elektromagnetischer Strahlung erfasst. Letzteres stimmt vorzugsweise mit dem Spektrum einer (Mess-) Strahlung überein, die zum Beispiel von einer Beleuchtungsvorrichtung eingestrahlt wird. Weiter können Glasflächen möglichst entspiegelt und/oder können Abschirmvorrichtungen zum Mindern des Einflusses von Umgebungslicht vorgesehen sein.

Allgemein ist der Überwachungssensor verschieden von einem Messsensor des Koordinatenmessgeräts. Beispielsweise kann sich der Messsensor dadurch auszeichnen, dass dessen Messsignale und/oder Messwerte zum Ermitteln der schlussendlich ausgegebenen Koordinaten eines Messobjekts verwendet werden, nicht aber diejenigen des Überwachungssensors. Der Überwachungssensor kann sich also hingegen dadurch auszeichnen, dass mit diesem keine Koordinaten des Messobjekts bestimmt werden. Allgemein kann der Messsensor eine höhere Erfassungsgenauigkeit und/oder einen kleineren Erfassungsbereich als der Überwachungssensor aufweisen. Beispielsweise kann der Erfassungsbereich des Überwachungssensors denjenigen des Messsensors um wenigstens das Zehnfache oder Hundertfache übersteigen, insbesondere wenn der Messsensor lediglich für ein Vermessen einzelner Objektpunkte eingerichtet ist.

Weiter können der Überwachungssensor und der Messsensor auf unterschiedlichen physikalischen Messprinzipien beruhen. Beispielsweise kann der Überwachungssensor als optische Strahlung reflektiertes Licht und insbesondere lediglich Licht im sichtbaren Wellenlängenspektrum erfassen, wohingegen der Messsensor prinzipiell nicht optisch (sondern taktil) arbeiten kann und/oder auf Basis von vom Messsensor eingestrahlten Licht und insbesondere Laserlicht. Insbesondere kann der Messsensor verschieden von einem Kamerasensor sein.

Zusammengefasst kann der Überwachungssensor lediglich während eines Einrichtbetriebs und nicht während eines eigentlichen Messbetriebs des Koordinatenmessgeräts betrieben werden oder dann zumindest nicht derart, dass der Überwachungssensor unmittelbar zur Koordinatenermittlung beiträgt.

Insbesondere kann vorgesehen sein, dass mit dem Überwachungssensor lediglich die Aufnahmevorrichtung oder auch anderweitige Objekte in einem Arbeitsraum des Koordinatenmessgeräts erfasst werden, nicht aber das Messobjekt oder zumindest nicht in der Weise, dass auf Basis von Messwerten des Überwachungssensors schlussendlich (als Messergebnis an einem Bediener) ausgegebene dreidimensionale Koordinaten des Messobjekts bestimmt werden. Beispielsweise kann der Überwachungssensor die genannten Objekte zwecks Kollisionsvermeidung mit bewegbaren Komponenten des Koordinatenmessgeräts erfassen, nicht aber im Rahmen eines Messbetriebs fortlaufend und/oder präzise dreidimensional vermessen.

Der Überwachungssensor ist bevorzugt als von dem eigentlichen Koordinatenmessgerät separate Komponente ausgebildet. Beispielsweise kann der Überwachungssensor räumlich getrennt sowie unabhängig von einem eigentlichen Messsensor des Koordinatenmessgeräts ausgebildet sein. Dies erfolgt bevorzugt aber derart, dass ein Erfassungsbereich des Überwachungssensors auf einen Arbeitsraum des Koordinatenmessgeräts gerichtet ist. Prinzipiell ist es aber auch möglich, dass der Überwachungssensor an einer Komponente des Koordinatenmessgeräts angeordnet oder in dieser aufgenommen ist und/oder per Datenleitung mit einer Steuereinrichtung des Koordinatenmessgeräts verbunden ist. Auch in diesem Fall leistet der Überwachungssensor aber bevorzugt keinen Beitrag zur eigentlichen Messobjektvermessung durch das Koordinatenmessgerät.

Der Messsensor kann in der vorstehend geschilderten Weise einwechselbar und/oder selektiv mit einer Sensorschnittstelle des Koordinatenmessgeräts verbindbar sein, was für den Überwachungssensor jeweils nicht gelten kann. Im Gegensatz zu Messsensoren kann der Überwachungssensor bevorzugt auch nicht selektiv in der Aufnahmevorrichtung aufgenommen oder dieser entnommen werden, beispielsweise da er verschiedenartig von dortigen Aufnahmebereichen für Messsensoren dimensioniert ist. Insbesondere kann der Überwachungssensor nicht von einer Kinematik des Koordinatenmessgeräts bewegt werden oder aber zumindest nicht von einer Kinematik, mit der auch der Messsensor relativ zu einem zu vermessenden Messobjekt bewegbar ist.

Die Aufnahmevorrichtung kann wenigstens einen Aufnahmebereich zur Aufnahme eines Messsensors umfassen. Im Rahmen dieser Offenbarung kann unter der Aufnahme eines Messsensors auch verstanden werden, dass lediglich Komponenten hiervon (wie zum Beispiel ein Sensorkopf oder aber ein einzelner Taststift) aufnehmbar sind, auch wenn dies nicht in jedem Einzelfall wiederholt wird.

Der Aufnahmebereich kann auch als ein Platz (Sensorplatz) bezeichnet werden. Es kann sich um einen geeignet dimensionierten und/oder geformten Freiraum handeln, um einen Messsensor einer bestimmten Art oder Klasse vorzugsweise zumindest abschnittsweise formschlüssig aufzunehmen. Beispielsweise kann der Aufnahmebereich wenigstens einen geöffneten Ringabschnitt aufweisen und/oder wenigstens eine gekrümmte Kante (zum Beispiel gebildet durch einen Kreisbogenabschnitt, der einen Winkel von wenigstens 60° oder wenigstens 120° überspannt).

Der Aufnahmebereich kann sich durch wenigstens eine Einfahrrichtung auszeichnen (oder auch Einführrichtung), gemäß derer eine Komponente in den Aufnahmebereich eingeführt oder, bei umgekehrter Bewegungsrichtung entlang derselben Bewegungsachse, aus diesem entnommen werden kann. Die Einfahrrichtung kann in einem Winkel und insbesondere orthogonal auf einer Anlagefläche das Aufnahmebereichs stehen, die bei Aufnahme des Messsensors mit diesem in Anlage gebracht werden soll. Derartige Anlageflächen können insbesondere Stirnflächen des Messsensors sein, die, bei Anbringen an einem Koordinatenmessgerät, typischerweise parallel zu einer Sensorschnittstelle verlaufen können.

Die Einfahrrichtung kann zum Beispiel durch eine Seite und/oder Öffnung des Aufnahmebereichs definiert sein, an der bzw. in die die Komponente in den Aufnahmebereich hinein bewegt werden kann (oder in umgekehrter Weise aus diesem entnommen werden kann). Entsprechend kann die Einfahrrichtung auch eine Seite des Aufnahmebereichs oder allgemein eine Relativbewegungsachse zum Aufnahmebereich definieren, entlang derer der Komponentenwechselvorgang auszuführen ist.

Allgemein kann der Messsensor (oder eine allgemeine auswechselbare Komponente) einen Bereich mit einer Schnittstelle und insbesondere einer Sensorschnittstelle zum Ankoppeln an das Koordinatenmessgerät aufweisen. Vorzugsweise gegenüberliegend hierzu und/oder abgewandt hiervon kann ein Bereich bereitgestellt sein, an/in dem eine ein Werkstück erfassende Einheit angeordnet oder anordenbar ist. Dieser Bereich kann (vorzugsweise ebene) Kontaktflächen zur Anlage an entsprechenden Anlageflächen des Aufnahmebereichs aufweisen.

Die Einfahrrichtung verläuft vorzugsweise entlang einer Relativbewegungsachse von Komponente/Messsensor und Aufnahmebereich, entlang derer ein geradliniges Einführen und, bei umgekehrter Richtung, ein geradliniges Entnehmen des Messsensors in bzw. aus einem Aufnahmebereich möglich ist. Insbesondere kann diese Relativbewegungsachse orthogonal auf einer Querschnittsfläche und/oder einem Öffnungsquerschnitt des Aufnahmebereichs stehen, insbesondere auf einer vom Aufnahmebereich zumindest teilweise umschlossenen Fläche. Die Komponente/der Messsensor können beim Einführen zumindest teilweise in dieser Querschnittsfläche anordenbar sein bzw. mit dieser überlappen. Das Bewegen entlang der Relativbewegungsachse kann ein Anlegen bzw. Abheben von Komponente/Messsensor an bzw. von einem Aufnahmebereich ermöglichen, vorzugsweise ohne dass die Komponente/Messsensor entlang des Aufnahmebereichs verschoben wird, gegenüber diesem unmittelbar verkippt wird oder sich an dem Aufnahmebereich lediglich punktuell oder einseitig abstützt. Letzteres könnte zum Beispiel dann auftreten, wenn die Komponente/Messsensor bei der Entnahme oder dem Einführen gegenüber dem Aufnahmebereich verkippt werden würde.

Zum Ermitteln wenigstens einer vorbestimmten Eigenschaft der Aufnahmevorrichtung auf Basis der sensorischen Erfassung, können im Rahmen der Erfassung erzeugte Aufnahmen, Bilddateien oder 3-D-Datensätze analysiert werden, beispielsweise mit einer Steueranordnung der hierin offenbarten Art. Insbesondere kann zunächst eine Objekterkennung durchgeführt werden, bei der die Aufnahmevorrichtung als Objekt in entsprechenden Dateien oder Datensätzen erkannt wird. Sofern hierin auf eine Objekterkennung Bezug genommen wird, versteht es sich, dass hierbei die Aufnahmevorrichtung als entsprechendes Objekt erkannt, markiert und/oder identifiziert werden soll.

Folglich kann bei einer Weiterbildung des Verfahrens und der Anordnung auf Basis der (Arbeitsraum-) Erfassung eine Objekterkennung (oder, mit anderen Worten, eine Objektklassifikation und/oder Objektzuordnung) durchgeführt werden, mittels der die Aufnahmevorrichtung als zu erkennendes Objekt im erfassten Arbeitsraum (also insbesondere in einer erfassten Datei oder einem erfassten Datensatz) erkannt werden kann. Unter dem Erkennen des Objekts bzw. der Aufnahmevorrichtung kann insbesondere eine Erkennung einer Art des Objekts, einer Klasse des Objekts, einer Baureihe, zu der das Objekt gehört, oder eines Typs des Objekts verstanden werden. Es ist nicht zwingend erforderlich, dass die exakte Identität (zum Beispiel eine Seriennummer) des Objekts festgestellt wird, was optional aber ebenso erfolgen kann.

Wurde ein Objekt (d. h. eine Aufnahmevorrichtung) erkannt, können dazugehörige erfasste Informationen (zum Beispiel Pixelwerte oder Daten eines Datensatzes) entsprechend klassifiziert, zusammengefasst, gespeichert oder anderweitig als Objekt markiert werden.

Allgemein kann die Objekterkennung auch lediglich die Erkennung der Anwesenheit einer Aufnahmevorrichtung umfassen, ohne aber zwingend genauere Details hiervon zu ermitteln. Dies kann dann in einem nachgelagerten Schritt erfolgen, bei dem beispielsweise eine Bilddatei oder ein 3D-Datensatz im Bereich des erkannten Objekts gezielt zum Ermitteln gewünschter Eigenschaften analysiert wird. Alternativ kann ein solcher Bereich mit einer nachstehend erläuterten Datenbank verglichen werden oder können zusätzliche Erfassungen und insbesondere 3D-Erfassungen in dem Bereich (zum Beispiel des Arbeitsraums des Koordinatenmessgeräts) eines erkannten Objekts/einer erkannten Aufnahmevorrichtung ausgeführt werden.

Gemäß einer Variante kann die Objekterkennung per interaktiver Benutzereingabe erfolgen. Beispielsweise kann der Benutzer mittels einer Eingabe- oder Bedienschnittstelle, die zum Beispiel mit einer Steueranordnung der hierin geschilderten Art verbunden ist, Eingaben tätigen. Auf diese Weise kann er beispielsweise das Objekt bzw. die Aufnahmevorrichtung in einem erfassten Bild identifizieren, es einrahmen und/oder anderweitig auswählen. Auch kann er eine Auswahl aus einer automatisch erstellten Vorauswahl treffen und/oder eine automatisch vorgenommene Objekterkennung final bestätigen oder anpassen, zum Beispiel durch Anpassen des Bereichs in einem erfassten Bild, der dem Objekt / der Aufnahmevorrichtung zugeordnet wird.

Ferner allgemein kann eine Objekterkennung auf Basis einer 3D-Erfassung erfolgen. Sind Höheninformationen des leeren Arbeitsraums und insbesondere für eine Objektunterlage bekannt (zum Beispiel für eine Arbeitsfläche oder Messtischoberfläche), können hiervon abweichende und insbesondere dieser gegenüber hervorstehende erfasste Höheninformationen einer Aufnahmevorrichtung im Arbeitsraum zugeordnet werden.

Eine Höhe oder allgemein Höheninformationen können in Bezug auf eine vertikale Raumachse definiert sein, die entlang der Wirkungsrichtung der Gravitationskraft verläuft. Zusätzlich oder alternativ kann die Höhe bzw. können Höheninformationen in Bezug auf eine Arbeitsfläche und insbesondere Messtischoberfläche des Koordinatenmessgeräts definiert sein und insbesondere in Bezug auf eine orthogonal hierzu verlaufende Achse. Wenigstens eine lineare Bewegungsachse des Koordinatenmessgeräts kann entlang dieser Achse verlaufen. Die Höhe oder Höheinformationen können, insbesondere wenn man eine optische Erfassungseinrichtung als Bezugspunkt wählt, bekanntermaßen ebenso als eine Tiefe bzw. als Tiefeninformationen bezeichnet werden.

Zusätzlich oder alternativ können jegliche der nachfolgenden Varianten zur Objekterkennung vorgesehen sein, allein oder in beliebiger Kombination. Mit diesen Varianten werden überwiegend Höheninformationen ermittelt, die in der vorstehend geschilderten Weise für eine Objekterkennung verwendbar sind. Weiter können einige der Varianten voraussetzen, dass die Arbeitsraumerfassung bereits unmittelbar in einer spezifischen Weise erfolgt, zum Beispiel aus unterschiedlichen Blickrichtungen oder mit spezifischen Überwachungssensoren:
- Objekterkennung auf Basis maschinellen Sehens und/oder mittels optischer Abstandssensoren, insbesondere durch Analysieren hierbei ermittelter Höheninformationen.
- Objekterkennung auf Basis von "Photometric Stereo" (bzw. Photometrisches Stereo), insbesondere mittels "shape from shading": Vorzugsweise wird hierbei die Aufnahmevorrichtung aus unterschiedlichen Richtungen mit Licht bestrahlt (d. h. beleuchtet) und wird per Bildauswertung analysiert (von im allgemeinen Fall wenigstens einem erfassten Bild je Bestrahlungsrichtung), wie deren Oberfläche das Licht reflektiert. Insbesondere können auf diese Weise (lokale) Normalenvektoren sowie (lokale) Höhen der Oberfläche bestimmt werden. Bei dem sogenannten "shape from shading" wird lediglich ein Bild mit undefiniert und/oder gleichzeitig aus verschiedenen Richtungen einfallender Bestrahlung bzw. Beleuchtung betrachtet.
- Objekterkennung auf Basis von "Depth from focus" (bzw. Tiefenmessung aus Fokussierungsfolge): Vorzugsweise wird in diesem Fall eine Fokuseinstellung zum Beispiel mittels einer Zoom-Optik des Überwachungssensors geändert und derjenige Fokusabstand, bei dem die größte Schärfe auftritt, zum Ermitteln einer Höheninformation verwendet werden. Alternativ kann eine Variation des Fokusabstandes dadurch erfolgen, dass ein Abstand des Überwachungssensor (dann bevorzugt mit gleichbleibender und/oder unveränderlicher Fokuseinstellung) zu dem Aufnahmebereich und/oder dem Arbeitsraum variiert wird.
- Objekterkennung auf Basis einer Erfassung durch eine Lichtfeldkamera und/oder Plenoptische Kamera (z.B. jeweils als Überwachungssensor): Vorzugsweise wird in diesem Fall Lichtstrahlung aus unterschiedlichsten Raumrichtungen erfasst und aufgezeichnet, also bildlich gesprochen das größtmögliche Lichtfeld einer Szene. Allgemein kann eine Lichtfeldkamera bzw. plenoptische Kamera im Gegensatz zu einer "normalen" Kamera nicht nur die Lichtintensität der durch eine Optik auf die einzelnen Pixel eines Kamera-Bildsensors auftreffenden Lichtstrahlen in 2D, sondern auch deren Richtung erfassen. Man spricht zum Teil daher von einer 4D-Erfassung des Lichtfeldes (der erfassten Szene). Erreicht wird dies typischerweise dadurch, dass zwischen der "normalen" Optik und dem Bildsensor ein Array von Mikrolinsen angeordnet wird. Aufgrund der Mikrolinsen wird das einfallende Bild (zumindest ausschnittsweise) mehrfach nebeneinander auf dem Bildsensor abgebildet, wobei die mehrfachen Abbildungen in Abhängigkeit von der Richtung der einfallenden Lichtstrahlen gegeneinander verschoben und verzerrt erscheinen. Daher ist es mit einer Lichtfeldkamera möglich, zusätzlich zu der 2D-Position eines aufgenommenen Messpunktes in der Bildebene auch noch die Entfernung zwischen dem Messpunkt und der Kamera zu bestimmen. Infolgedessen ermöglicht die Lichtfeldkamera die Bestimmung einer 3D-Koordinate (und somit insbesondere einer Höheninformation) zu einem oder mehreren ausgewählten Messpunkten bzw. aufgenommenen Bildpunkten anhand des von der Lichtfeldkamera aufgenommenen ersten Bildes.
- Objekterkennung auf Basis von Stereoskopie und insbesondere "Multiview Stereo" (bzw. Mehransichten-Stereoskopie): Vorzugsweise werden hierbei wenigstens zwei oder aber mehr als zwei erfasste Bilder des Arbeitsraums aus unterschiedlichen Blickrichtungen erfasst und werden mittels bekannter Bildauswertealgorithmen 3D-Koordinaten von Punkten (und insbesondere Objektpunkten) im Arbeitsraum ermittelt.
- Objekterkennung auf Basis eines Computermodells (insbesondere Maschinenlernmodells): In diesem Fall kann das Computermodell zum Beispiel ein neuronales Netz umfassen oder ein solches abbilden. Zusätzlich oder alternativ kann es mittels Bildern des Arbeitsraums trainiert werden, um in zukünftig erfassten Bildern zwischen nicht relevanten Bestandteilen des Arbeitsraums und/oder des Koordinatenmessgeräts und im Arbeitsraum positionierten Aufnahmevorrichtungen zu differenzieren. Beispielsweise kann das Computermodell mittels Bildern des leeren Arbeitsraums trainiert werden. Darauf basierend kann z.B. mittels semantischer Segmentierung der Arbeitsraum von vorhandenen Objekten getrennt und die Objekte auf diese Weise erkannt werden. Alternativ oder zusätzlich kann das Trainieren mittels Bildern oftmals im Arbeitsraum positionierter Aufnahmevorrichtungen erfolgen und/oder mittels Bildern, die (insbesondere bewegte) Komponenten des Koordinatenmessgeräts abbilden (zum Beispiel Maschinenachsen). Erkennt das Computermodell in einem erfassten Bild einen bestimmten Bereich nicht als leeren Arbeitsraum (und/oder als allgemeine Umgebung) oder nicht als Komponente des Koordinatenmessgeräts, und/oder wird dieser Bereich als häufig erwartete Aufnahmevorrichtung erkannt, kann der Bereich als Aufnahmevorrichtung klassifiziert werden.
- Objekterkennung auf Basis einer Texturanalyse: In diesem Zusammenhang kann auf gängige Lösungen der industriellen Bildverarbeitung zurückgegriffen werden, mit denen Texturen von Objektoberflächen optisch erfasst und erkannt werden können. Weist zum Beispiel eine Arbeitsfläche (Messtischoberfläche) des Koordinatenmessgeräts und/oder weisen Komponenten des Koordinatenmessgeräts selbst eine bestimmte Textur auf, können hiervon abweichende Texturen als Aufnahmevorrichtung erkannt werden.
- Objekterkennung auf Basis einer Analyse von codierten Markern: Vorzugsweise sind die Aufnahmevorrichtungen mit codierten Markern versehen, wie zum Beispiel mit einem QR-Code. Durch optisches Erfassen und Dekodieren des QR-Codes kann dann optional sogar eine genaue Identität oder können der Aufnahmevorrichtung zugeordnete Informationen/Eigenschaften festgestellt werden.

Eine Variante sieht vor, dass die Objekterkennung auf Basis eines Differenzbildes durchgeführt wird, wobei das Differenzbild die Differenz enthält zwischen einem ersten Bild, das einen objektfreien Arbeitsraum abbildet (insbesondere denselben, zu einem früheren und leeren Zeitpunkt aufgenommenen Arbeitsraum) und einem zweiten Bild, das den Arbeitsraum mit wenigstens einem darin enthaltenen Objekt abbildet. Bei dem Objekt handelt es sich wiederum um eine Aufnahmevorrichtung. Das erste und zweite Bild können von dem Überwachungssensor und allgemein während dem Erfassen des Arbeitsraums erzeugt werden bzw. erzeugt worden sein. Diese Variante ermöglicht eine zuverlässige Objekterkennung bei geringem Rechenaufwand.

Die hierin geschilderte Objekterkennung setzt nicht zwingend voraus, dass zwischen den Aufnahmevorrichtungen und anderweitigen im Arbeitsraum möglicherweise angeordneten Objekten automatisch differenziert werden kann. Stattdessen kann ein Bediener einen relevanten Erfassungsbereich für den Überwachungssensor und/oder für eine Objekterkennung vorab derart definieren oder auswählen, dass anderweitige Objekte nicht erfassbar sind.

Es kann aber auch vorgesehen sein, dass im Rahmen der Objekterkennung zwischen einer Aufnahmevorrichtung und anderweitigen Objekten (zum Beispiel Messobjekten, Aufspannvorrichtungen, Paletten oder Drehtischen) vorzugsweise automatisch differenziert wird. Hierfür kann eine Steueranordnung der hierin offenbarten Art beispielsweise per Bildauswertealgorithmen und/oder Mustererkennung von Aufnahmevorrichtungen verschiedene Objekte erkennen und von einer weiteren Analyse ausschließen.

Prinzipiell kann aber ebenso vorgesehen sein, sämtliche Objekte eines Arbeitsraums in der vorstehend geschilderten Weise als Objekte zu erkennen und/oder Höheninformationen hierfür zu erfassen und erst im Rahmen eines nachgelagerten Schrittes zu ermitteln, welches dieser Objekte tatsächlich eine Aufnahmevorrichtung ist. Dies kann zum Beispiel anhand der nachstehend erläuterten Datenbank erfolgen und genauer gesagt anhand einer Überprüfung, ob in der Datenbank hinterlegte Aufnahmevorrichtungen mit einem erfassten Objekt übereinstimmen oder nicht.

Das Durchführen eines Komponentenwechselvorgangs unter Berücksichtigung der ermittelten Eigenschaft kann in der Weise erfolgen, dass eine Bewegungsabfolge und insbesondere eine Einfahrbewegung oder Entnahmebewegung nach Maßgabe der ermittelten Eigenschaft definiert und/oder ausgeführt wird. Beispielsweise kann eine hierfür zugrundegelegte Bewegungsbahn oder ein Bewegungspfad entsprechend geplant werden. Dies betrifft insbesondere Varianten, bei denen die Eigenschaft eine Anordnung der Aufnahmevorrichtung im Arbeitsraum des Koordinatenmessgeräts zumindest mittelbar definiert. Insbesondere kann eine als Eigenschaft ermittelte Position oder Orientierung ermittelt werden und kann das Koordinatenmessgerät entsprechend zu dieser Position bewegt werden und seine eigene Orientierung an die ermittelte Orientierung geeignet anpassen.

Allgemein kann ein Komponentenwechselvorgang umfassen, dass das Koordinatenmessgerät und insbesondere eine Schnittstelle zum Ankoppeln der einwechselbaren Komponente zu der Aufnahmevorrichtung bewegt wird und eine dort gelagerte Komponente eingewechselt. Anschließend kann das Koordinatenmessgerät wieder von der Aufnahmevorrichtung entfernt werden bzw. sich von dieser wegbewegen. Falls das Koordinatenmessgerät bereits vorher mit einer entsprechenden Komponente gekoppelt war, kann vor dem geschilderten Ankoppeln die zunächst angekoppelte Komponente in der Aufnahmevorrichtung abgelegt werden, zum Beispiel in einem freien Aufnahmebereich. Anschließend kann sich das Koordinatenmessgerät zu einem Aufnahmebereich mit der einzuwechselnden Komponente bewegen und dort seine Schnittstelle in an sich bekannter Weise automatisch mit der Komponente verbinden.

Bei einer Weiterbildung des Verfahrens und der Anordnung wird die Aufnahmevorrichtung vollständig mit dem optischen Überwachungssensor erfasst. Unter der vollständigen Erfassung kann verstanden werden, dass der Überwachungssensor die Aufnahmevorrichtung soweit wie dies mit seinem Erfassungsbereich möglich ist vollständig erfasst und/oder abbildet. Beispielsweise kann der Erfassungsbereich die Aufnahmevorrichtung vollständig enthalten oder sich vollständig mit dieser überlappen. Insbesondere kann ein vom Überwachungssensor aufgenommener Bildausschnitt oder aber ein dreidimensionaler Erfassungsbereich derart gewählt sein, dass die Aufnahmevorrichtung vollständig darin enthalten ist.

Es versteht sich aber, dass mit einem zweidimensionalen Überwachungssensor keine direkte Erfassung der Aufnahmevorrichtung in einer Höhendimension möglich ist, da dies der Erfassungsbereich des Überwachungssensors nicht erlaubt. Wenn aber die Aufnahmevorrichtung dennoch vollständig im zweidimensionalen Erfassungsbereich enthalten und somit vollständig abgebildet ist, kann dies dennoch als (aus Sicht des Überwachungssensors bzw. mit dessen Möglichkeiten) vollständige Erfassung verstanden werden. Anders ausgedrückt liegt eine vollständige Erfassung insbesondere dann vor, wenn die Aufnahmevorrichtung nicht nur teilweise im Erfassungsbereich enthalten und/oder aus diesem zum Beispiel seitlich oder allgemein quer zu einer Bildebene oder einem Erfassungsvolumen hervorsteht.

Wie vorstehend bereits angedeutet, kann gemäß einer Ausführungsform auf Basis der Erfassung wenigstens ein Datensatz erzeugt werden (zum Beispiel eine zweidimensionale Bilddatei oder aber ein 3D-Datensatz) und die Eigenschaft kann basierend auf einer Suche nach und/oder dem Ermitteln von vorbestimmten Merkmalen und insbesondere geometrischen Merkmalen (zum Beispiel Formmerkmalen) in dem Datensatz ermittelt werden. Insbesondere kann das Merkmal von einem Aufnahmebereich der Aufnahmevorrichtung umfasst sein, beispielsweise zumindest anteilig von dessen Öffnungsquerschnitt gebildet werden oder diesem und insbesondere dessen Form entsprechen. Die Suche kann zum Beispiel mittels einer Mustererkennung erfolgen, wobei die Merkmale entsprechend zu erkennende Muster definieren. Die Mustererkennung kann mittels bekannter Bildauswertealgorithmen von einer hierin geschilderten Steueranordnung durchgeführt werden.

Die Muster bzw. Merkmale können beispielsweise Eckpunkte, Kanten, Öffnungen, Umrisse oder Konturen von Aufnahmevorrichtungen oder aber deren Aufnahmebereiche definiert sein, wobei diese Merkmale vorzugsweise aus Blickrichtungen definiert sind und/oder betrachtet werden, die auch einer Blickrichtung des Überwachungssensors auf eine Arbeitsfläche des Koordinatenmessgeräts entspricht. Beispielsweise können die Merkmale in einer Draufsicht der Aufnahmevorrichtung oder der Aufnahmebereiche betrachtet werden bzw. definiert sein. Anhand derartiger Konturen aber auch anhand allgemein erkannter Merkmale können (insbesondere bei teilkreisförmigen und/oder asymmetrischen Aufnahmebereichen) Mittelpunktskoordinaten und/oder Orientierungen der Aufnahmebereiche oder aber der Aufnahmevorrichtung als Eigenschaften ermittelt werden.

Erfindungsgemäß wird von der Aufnahmevorrichtung zumindest ein Teil (d. h. Anteil, Bereich oder Abschnitt) mit wenigstens einem Aufnahmebereich für eine einwechselbare Komponente erfasst. Der Aufnahmebereich kann eine Ausnehmung, eine Öffnung, eine Vertiefung oder dergleichen umfassen. In diesem kann die Komponente vorzugsweise formschlüssig anordenbar sein. Durch Erfassen des Aufnahmebereichs werden als Eigenschaften der Aufnahmevorrichtung Eigenschaften dieses Aufnahmebereichs ermittelt, nämlich dessen Position und/oder Orientierung. Weiter können auch eine Größe oder, bei einem entsprechend großen Erfassungsbereich, eine Anzahl verfügbarer Aufnahmebereiche als Eigenschaften ermittelt werden.

Gemäß einem weiteren Aspekt von Verfahren und Anordnung wird als eine Eigenschaft eine Einfahrrichtung in zumindest einen Aufnahmebereich der Aufnahmevorrichtung ermittelt.

Dies kann insbesondere derart erfolgen, dass eine Position, Ausrichtung und/oder Orientierung des Aufnahmebereichs ermittelt wird. Aufgrund einer erwartungsgemäß festgelegten Anbindung der Aufnahmevorrichtung an eine Arbeitsfläche des Koordinatenmessgeräts (zum Beispiel ein flächiges Auflegen darauf oder Befestigen daran) kann eine Orientierung und insbesondere ein Winkel des Aufnahmebereichs zur Arbeitsfläche prinzipiell bekannt sein. Beispielsweise kann der Aufnahmebereich (zum Beispiel ein Öffnungsquerschnitt hiervon) parallel oder unter einem vorbestimmten Winkel zur Arbeitsfläche ausgerichtet sein.

Soll ein geradliniges Einführen oder Entnehmen von Komponenten in den bzw. aus dem Öffnungsquerschnitt erfolgen, kann der Winkel der Einfahrrichtung relativ zur Arbeitsfläche mit den genannten Winkeln des Aufnahmebereichs übereinstimmen. Jedoch kann es erforderlich sein, insbesondere bei asymmetrischen Aufnahmebereichen (zum Beispiel bei einseitig offenen Öffnungsquerschnitten), weitere Komponenten der Einfahrrichtung zu ermitteln, damit der Aufnahmebereich von einer vorgesehenen Seite oder in einem vorgesehenen Bereich angefahren wird.

Zusätzlich oder alternativ kann die Einfahrrichtung anhand optisch erfassbarer Merkmale sozusagen mittelbar bestimmt werden. Beispielsweise weisen Aufnahmeeinrichtungen oftmals Logos, Aufdrucke, Etikette und/oder Text auf. Wenn bereits ermittelt wurde, um welche Art von Aufnahmeeinrichtung es sich handelt, kann anhand der Ausrichtung dieser Merkmale die Einfahrrichtung bestimmt werden. Anhand einer Verzerrung in erfassten Abbildungen dieser Merkmale kann bevorzugt auch der Winkel relativ zur Arbeitsfläche bestimmt werden.

Zusätzlich oder alternativ kann als eine Eigenschaft die Art der Aufnahmevorrichtung ermittelt werden. Hierzu können zum Beispiel nachstehend erläuterte Marker an einer Aufnahmevorrichtung oder anderweitige optisch erkennbare Identifizierungsmerkmale ermittelt und/oder decodiert werden. Alternativ oder zusätzlich kann ein Abgleich von erfassten Merkmalen mit einer nachstehend erläuterten Datenbank erfolgen, welche als Einträge Aufnahmevorrichtungen und/oder erfassbare Merkmale hiervon umfasst. Wurde die Art der Aufnahmevorrichtung ermittelt, kann zum Beispiel umgehend und insbesondere mithilfe der genannten Datenbank auf weitere dort hinterlegte Eigenschaften rückgeschlossen werden, zum Beispiel eine Art und Anzahl von Aufnahmebereichen oder eine einzunehmende Einfahrrichtung.

Erfindungsgemäß wird als eine Eigenschaft die Position und/oder Orientierung der Aufnahmevorrichtung, nämlich von wenigstens einem Aufnahmebereich hiervon, ermittelt. Dies ermöglicht eine entsprechend zutreffende Positionierung und/oder Orientierung des Koordinatenmessgeräts während eines Komponentenwechselvorgangs. Um diese Eigenschaften zu ermitteln, kann die vorstehend erläuterte Mustererkennung oder eine anderweitige Bildauswertung (oder 3D-Auswertung) stattfinden. Insbesondere können dabei Kantenverläufe, Eckpunktpositionen oder Öffnungsquerschnitte als geometrische Merkmale erkannt und anhand deren Positionierung und/oder Ausrichtung auf die Position und/oder Orientierung der Aufnahmevorrichtung geschlossen werden.

Bei einer zusätzlichen Ausführungsform des Verfahrens der Anordnung weist die Aufnahmevorrichtung wenigstens einen optisch erfassbaren codierten Marker (zum Beispiel ein QR-Code) auf und anhand eines Dekodierens des Markers wird wenigstens eine Eigenschaft ermittelt, beispielsweise zusätzlich zu jeglichen anderen hierin ermittelten Eigenschaften. Insbesondere kann darauf basierend die Art der Aufnahmevorrichtung ermittelt und können darauf basierend und wie vorstehend erläutert weitere Eigenschaften der Aufnahmevorrichtung ermittelt werden. Der Marker kann entsprechend eine codierte Identität der Aufnahmevorrichtung und/oder codierte Eigenschaften umfassen.

Bei einer Weiterbildung der Anordnung und des Verfahrens wird auf Basis der Erfassung (und insbesondere wenigstens eines erfassten Merkmals der Aufnahmevorrichtung) ein Vergleich mit einer Datenbank durchgeführt, in der Aufnahmevorrichtungen und/oder Eigenschaften von Aufnahmevorrichtungen hinterlegt sind. Insbesondere kann dann, wenn eine Übereinstimmung eines erfassten Merkmals mit einem hinterlegten Merkmal festgestellt wird, eine dem hinterlegten Merkmal zugeordnete Eigenschaft ausgelesen werden. Diese kann dann zur Definition von Komponentenwechselvorgängen und insbesondere dabei auszuführenden Bewegungen verwendet werden. Bei der hinterlegten Eigenschaft kann es sich um jegliche hierin erwähnte Eigenschaft handeln und insbesondere um eine Anzahl, Form oder um Dimensionen von Aufnahmebereichen.

Anders ausgedrückt können also vorab hinterlegte Eigenschaften von Aufnahmevorrichtungen mittels der Datenbank ermittelt werden, und zwar vorzugsweise durch Überprüfen, ob erfasste Merkmale jeglicher hierin erwähnten Art mit Einträgen der Datenbank (zum Beispiel dort hinterlegten virtuellen Modellen von Aufnahmevorrichtungen) übereinstimmen. Insbesondere kann in diesem Zusammenhang innerhalb der Datenbank einer jeden Aufnahmevorrichtung wenigstens eine Eigenschaft zugeordnet sein und dann, wenn im Rahmen des Vergleichs eine Übereinstimmung mit einem Eintrag der Datenbank ermittelt wird, die zugeordnete Eigenschaft als Eigenschaft der sensorisch erfassten Aufnahmevorrichtung ermittelt werden.

Darauf hinzuweisen ist, dass der Vergleich mit der Datenbank prinzipiell dadurch erfolgen kann, dass per 2D-Erfassung Ansichten und/oder geometrische Merkmale der Aufnahmevorrichtung erfasst werden. Diese Ansichten können mit hinterlegten Ansichten verglichen werden, auch mit Ansichten hinterlegter dreidimensionaler Modelle von Aufnahmevorrichtungen. Beispielsweise können zweidimensionale Ansichten der Aufnahmevorrichtung aus der Arbeitsraumerfassung erhalten werden und kann überprüft werden, ob diese Ansichten einer hinterlegten Aufnahmevorrichtung zuordenbar sind bzw. mit diesen übereinstimmen. Anders formuliert kann gemäß einem Aspekt des Verfahrens und der Anordnung im Rahmen der Erfassung wenigstens eine zweidimensionale Ansicht der Aufnahmevorrichtung erfasst werden und kann diese Ansicht mit der Datenbank verglichen werden (d.h. um eine überstimmende dort hinterlegte Aufnahmevorrichtung zu ermitteln).

Ferner kann in diesem Zusammenhang eine Position und/oder Orientierung der Aufnahmevorrichtung auf Basis der übereinstimmenden Aufnahmevorrichtung aus der Datenbank ermittelt werden. Beispielsweise kann anhand der zweidimensionalen Ansicht auf eine Relativanordnung von einer hierzu übereinstimmenden (hinterlegten) Aufnahmevorrichtung und einem Überwachungssensor geschlossen werden. In Kenntnis von Dimensionen der Aufnahmevorrichtung, wie zum Beispiel in der Datenbank hinterlegt, kann dann eine Lage der Aufnahmevorrichtung im Arbeitsraum ermittelt und genauer gesagt berechnet werden. Auf diese Weise können auf Basis einer aufwandsarmen 2D-Erfassung dennoch dreidimensionale Eigenschaften der Aufnahmevorrichtung und/oder des festzulegenden Sicherheitsbereichs bestimmt werden. Anders ausgedrückt kann auf Basis der 2D-Erfassung ein 2D-3D-Rendering durchgeführt werden.

Auch eine 3D-Erfassung ist aber möglich und kann auch zum Erzeugen eines dreidimensionalen virtuellen Modells der Aufnahmevorrichtung (zum Beispiel ein CAD-Modell) verwendet werden. Im letztgenannten Fall kann das erzeugte Modell mit hinterlegten Modellen von Aufnahmevorrichtungen verglichen werden. Bei Übereinstimmungen können hinterlegte Eigenschaften ausgelesen und für den weiteren Betrieb des Koordinatenmessgeräts verwendet werden.

Zusammengefasst können in der Datenbank Aufnahmevorrichtungen, wie erwähnt, als virtuelle (zum Beispiel als dreidimensionale CAD-Modelle) definiert sein oder aber können lediglich ausgewählte vorzugsweise dreidimensionale Eigenschaften/Merkmale einzelner Aufnahmevorrichtungen zum Beispiel als ein einzelner Datensatz hinterlegt sein.

Das Überprüfen mittels einer Datenbank ermöglicht einen hohen Automatisierungsgrad, da keine oder nur begrenzte Benutzereingaben erforderlich sind. Auch wird hierdurch das Risiko von Fehlermittlungen relevanter Eigenschaften gemindert, da für häufig im Arbeitsraum positionierte Aufnahmevorrichtungen zu berücksichtigende Eigenschaften beispielsweise durch einen Hersteller des Koordinatenmessgeräts vorab definiert werden können.

Dreidimensionale Eigenschaften, die bei oder auf Basis einer 3D-Erfassung der Aufnahmevorrichtung erfasst werden, können zum Erzeugen eines dreidimensionalen Modells der Aufnahmevorrichtung verwendet werden. Dieses Modell kann insbesondere ein CAD-Modell sein. Prinzipiell ist es aber auch möglich, dass das Modell einem zweidimensionalen Grundriss oder einer Draufsicht auf eine erfasste Aufnahmevorrichtung entspricht, der/die mit einer Information zur Objekthöhe als dritte Dimension kombiniert ist. Es muss sich also nicht zwingend um eine vollständige ortsaufgelöste räumliche Definition die Aufnahmevorrichtung handeln.

Bei jeglichem hierin geschilderten Modell kann es sich um einen virtuellen Datensatz handeln, der die Form und/oder Abmessungen der Aufnahmevorrichtung abbildet oder beschreibt. Durch eine entsprechende Modelldefinition kann die Genauigkeit beim Festlegen des Sicherheitsbereichs zusätzlich verbessert werden, bspw. da dieser präzise an die tatsächliche Vorrichtungsform anpassbar ist. Weiter kann hierdurch das Auffinden relevanter Einträge in der vorstehend geschilderten Datenbank vereinfacht werden.

Insbesondere sieht ein Aspekt des Verfahrens und der Anordnung vor, dass zum Überprüfen, ob für eine erfasste Aufnahmevorrichtung Eigenschaften in einer Datenbank hinterlegt sind, ein erzeugtes (virtuelles) Modell und/oder ermittelte dreidimensionale Eigenschaften der Aufnahmevorrichtung mit Einträgen einer Datenbank verglichen werden, wobei die Einträge bevorzugt ebenfalls (virtuelle) Modelle oder Eigenschaften von Aufnahmevorrichtungen sind. Vorzugsweise wird dann, wenn eine Übereinstimmung vorliegt, eine vorab hinterlegte Eigenschaft ausgewählt, die dem übereinstimmenden Eintrag aus der Datenbank zugeordnet ist. Liegt hingegen keine Übereinstimmung vor, werden zu berücksichtigende Eigenschaften bevorzugt auf Basis (erfasster) dreidimensionaler Eigenschaften der Aufnahmevorrichtung festgelegt.

Jegliche hierin geschilderte Objektdatenbank kann in einer Speichereinrichtung zum Beispiel des Koordinatenmessgeräts oder aber von einer nachstehend geschilderten Steueranordnung hinterlegt sein. Die Einträge der Datenbank können Aufnahmevorrichtungen oder Eigenschaften oder Modelle von Aufnahmevorrichtungen sein. Diese Einträge weisen bevorzugt gleichartige Dateiformate und/oder Definitionsarten auf, wie entsprechende auf Basis der Arbeitsraumerfassung erzeugte (Vergleichs-) Informationen. Eigenschaften eines erzeugten und/oder hinterlegten Modells, wie zum Beispiel die dreidimensionale Form, zumindest ausgewählte Abmessungen oder ein Grundriss, können auf diese Weise besonders effektiv verglichen werden.

Eine Übereinstimmung verglichener Aufnahmevorrichtungen bzw. von Modellen hiervon kann dann vorliegen, wenn verglichene Merkmale (zum Beispiel Formen, Draufsichten/Grundrisse, Abmessungen o. ä.) nicht über eine zulässige Abweichung hinaus voneinander abweichen. Bei einem Überschreiten der zulässigen Abweichung kann hingegen keine Übereinstimmung festgestellt werden. Prinzipiell ist es auch möglich, Sicherheitsbereiche nach Maßgabe der festgestellten Abweichung anzupassen (insbesondere, wenn diese unterhalb der zulässigen Abweichung liegt), beispielsweise entsprechend zu verkleinern, zu vergrößern oder dessen Form zu ändern.

Die Überprüfung hinsichtlich etwaiger Übereinstimmungen kann auf Basis jeglicher der folgenden Ansätze und/oder Algorithmen ausgeführt werden, allein oder in beliebiger Kombination:
- "Shape Based Matching" (bzw. formbasiertes Zuordnen): Vorzugsweise werden in diesem Fall zur Formbeschreibung Eckpunkte und/oder Kanten (oder auch "Edges") von Datensätzen oder Modellen ermittelt (zum Beispiel per 3D-Auswertealgorithmen und/oder auf Basis von Gradienten). Die Eckpunkte und/oder Kanten werden dann als Vergleichsmerkmale verwendet, um Übereinstimmungen von Aufnahmevorrichtung und insbesondere Modellen hiervon zu prüfen. Hierbei können zum Beispiel Kantenlängen, Kantenpositionen oder Kantenverläufe bzw. Eckpunktpositionen oder Eckpunktabstände betrachtet werden.
- "Texture Based Matching" (bzw. texturbasiertes Zuordnen): Erfasste Vorrichtungsdaten und/oder erzeugte Vorrichtungsmodelle können um Texturinformationen angereichert werden. Als zu vergleichende Textureigenschaften kann zum Beispiel eine Dichte oder Verteilung von Texturmerkmalen verglichen werden. Zusätzlich oder alternativ ist es auch möglich, die Texturinformationen separat zu speichern, zum Beispiel als Bilddateien, die vorzugsweise dann entsprechenden Modellen zugeordnet sind. In erfassten Bildern kann dann nach entsprechenden Texturen gesucht werden.
- "3D Matching" (bzw. dreidimensionales Zuordnen): In diesem Fall können zum Beispiel Punktewolken oder anderweitige Strukturmerkmale der Aufnahmevorrichtungen bzw. von deren Modellen miteinander verglichen und insbesondere Abweichungen hierzwischen ermittelt werden.
- Maschinenlernmodell (insbesondere neuronales Netz): In diesem Fall können dem Maschinenlernmodell während einer Trainingsphase Aufnahmevorrichtungen oder Modelle hiervon bereitgestellt werden (insbesondere zumindest paarweise), die als übereinstimmend eingestuft sind, zum Beispiel von einem menschlichen Experten. Optional können aber auch nicht übereinstimmende Vorrichtungen oder Modelle zwecks Trainieren des maschinellen Modells bereitgestellt werden.
- "Nearest Neighbor Search" (bzw. Nächste-Nachbarn-Suche oder auch - Klassifikation): Vorzugsweise werden in diesem Fall Merkmalsvektoren definiert, die vorbestimmte Merkmale bzw. Eigenschaften einer jeweiligen Aufnahmevorrichtung oder eines Modells enthalten, zum Beispiel Abmessungen in bestimmten Raumdimensionen. Alternativ oder zusätzlich können Längenverhältnisse, zum Beispiel von Hauptachsen eines Grundrisses von Aufnahmevorrichtungen, oder eine Anzahl von Öffnungen und/oder Aufnahmebereichen als Eigenschaften betrachtet werden. Eine Vorrichtung oder ein Modell kann dann demjenigen Datenbank-Eintrag als übereinstimmend zugeordnet werden, zu deren Merkmalsvektor die geringsten Abweichungen vorliegen, insbesondere sofern diese Abweichungen maximal zulässige Abweichungen nicht überschreiten.
- Bayesches Klassifikationsverfahren: Vorzugsweise wird in diesem Fall auf bekannte Algorithmen nach Art eines Bayes-Klassifikators zurückgegriffen. Diese können wahrscheinlichkeitsbasierte Zuordnungen zwischen Aufnahmevorrichtungen und deren Modellen vornehmen, um Übereinstimmungen zu identifizieren. Dies kann erneut auf Basis (vorzugsweise automatisch) identifizierter Merkmale/Eigenschaften jeglicher hierin geschilderten Art der einzelnen Aufnahmevorrichtungen stattfinden.

Dadurch, dass zunächst die Übereinstimmung mit hinterlegten Datenbankeinträgen überprüft wird, wird die Möglichkeit geschaffen, schnell relevante Eigenschaften bestenfalls ohne weitere Anpassungen zu übernehmen. Hierdurch können erwartungsgemäß bessere Ergebnisse in kürzerer Zeit erzielt werden, als wenn stets für jede erfasste Aufnahmevorrichtung individuelle Eigenschaften neu ermittelt werden würden.

Gemäß einem weiteren Aspekt des Verfahrens und der Anordnung sind einem Bediener mittels einer Anzeigevorrichtung Ergebnisse der Erfassung und/oder Eigenschaftsermittlung anzeigbar (bzw. werden mit dieser angezeigt) und Vorgaben von dem Bediener bezüglich einer Fortsetzung des Verfahrens mittels einer Bedienschnittstelle erfassbar (bzw. werden mit dieser erfasst). Auf diese Weise kann der Bediener als eine Art Kontrollinstanz automatische Eigenschaftsermittlungen von Aufnahmevorrichtungen kontrollieren und/oder für eine weitere Verwendung freigegeben. Dies erhöht die Betriebssicherheit des Koordinatenmessgeräts. Der Bediener kann auch zu ausgewählten und vorzugsweise beliebigen Verfahrensschritten zurückkehren und deren erneute Ausführung veranlassen, um die Qualität der Eigenschaftsermittlung zu verbessern.

Die Erfindung betrifft auch eine Anordnung, mit:
- einem Koordinatenmessgerät;
- wenigstens einer Aufnahmevorrichtung für wenigstens eine einwechselbare Komponente des Koordinatenmessgeräts, insbesondere für einen Messsensor oder eine Messsensorkomponente,
- wenigstens einen optischen Überwachungssensor, der dazu eingerichtet ist, zumindest einen überwiegenden Teil der Aufnahmevorrichtung zu erfassen; und
- einer Steueranordnung, die dazu eingerichtet ist, wenigstens eine vorbestimmte Eigenschaft der Aufnahmevorrichtung auf Basis der optischen Erfassung zu ermitteln, und die ferner dazu eingerichtet ist, einen Komponentenwechselvorgang unter Berücksichtigung der ermittelten Eigenschaft durchzuführen.

Die Anordnung kann jegliche Weiterbildung und jegliches weitere Merkmal umfassen, um sämtliche der vorstehenden und nachstehenden Verfahrensschritte, Betriebszustände und Funktionen bereitzustellen oder auszuführen. Insbesondere kann die Anordnung dazu eingerichtet sein, ein Verfahren gemäß jeglichem der vorstehenden und nachstehenden Aspekte auszuführen. Sämtliche der vorstehenden Erläuterungen zu und Weiterbildungen von Verfahrensmerkmalen können bei den gleichlautenden Anordnungsmerkmalen ebenso vorgesehen sein bzw. auf diese zutreffen.

Die Steueranordnung kann wenigstens eine Steuereinrichtung (oder ein Steuergerät) umfassen oder als eine solche realisiert sein. Es kann sich aber auch um eine mehrteilige Steueranordnung handeln, die mehrere Steuereinrichtungen umfasst, die beispielsweise räumlich verteilt sind und/oder miteinander über Datenleitungen kommunizieren können.

Insbesondere kann die Steueranordnung (zum Beispiel als einzige oder aber als eine von mehreren Steuereinrichtungen) die Steuereinrichtung des Koordinatenmessgeräts umfassen, mit der vorzugsweise auch eine Bewegungssteuerung insbesondere während eines Komponentenwechselvorgangs erfolgt.

Gemäß einer Ausführungsform umfasst die Steueranordnung wenigstens zwei Steuereinrichtungen, beispielsweise eine erste für eine Auswertung der Erfassung und/oder einem darauf basierenden Ermitteln der Eigenschaften und eine zweite für die Steuerung des Komponentenwechselns. Optional kann die erste Steuereinrichtung auch eine Bahnplanung für die auszuführenden Bewegungen durchführen. Die erste Steuereinrichtung kann ein herkömmlicher PC und/oder kein fester Bestandteil des Koordinatenmessgeräts sein. Bei der zweiten Steuereinrichtung kann es sich um eine Steuereinrichtung des Koordinatenmessgeräts handeln.

Die Steueranordnung, insbesondere aber jegliche hiervon umfasste Steuereinrichtung, kann allgemein digital und/oder elektronisch betreibbar sein. Sie kann wenigstens einen Prozessor aufweisen (zum Beispiel einen Mikroprozessor). Ferner kann sie wenigstens eine (digitale) Speichereinrichtung aufweisen. Der Prozessor kann dazu eingerichtet sein, Programmcode, der zum Beispiel auf der Speichereinrichtung hinterlegt ist, auszuführen, und dadurch die Steueranordnung zum Ausführen der hierin geschilderten Maßnahmen zu veranlassen.

Im Folgenden werden Ausführungsformen der Erfindung anhand der beigefügten schematischen Figuren erläutert. In Ihrer Art und/oder Funktion übereinstimmende Merkmale können dabei figurenübergreifend mit den gleichen Bezugszeichen versehen sein. Es stellen dar:
- Fig. 1:: eine Ansicht einer erfindungsgemäßen Anordnung gemäß einem Ausführungsbeispiel, mit der beispielhafte erfindungsgemäße Verfahren ausgeführt werden;
- Fig. 2:: eine Draufsicht auf eine Aufnahmevorrichtung 14 der Anordnung aus Figur 1;
- Fig. 3A: ein Ablaufschema eines mit der Anordnung aus Figur 1 ausgeführten Verfahrens, bei dem zweidimensionale Erfassungen eines Arbeitsraums ausgeführt werden;
- Fig. 3B: ein Ablaufschema eines mit der Anordnung aus Figur 1 ausgeführten Verfahrens, bei dem dreidimensionale Erfassungen eines Arbeitsraums ausgeführt werden.

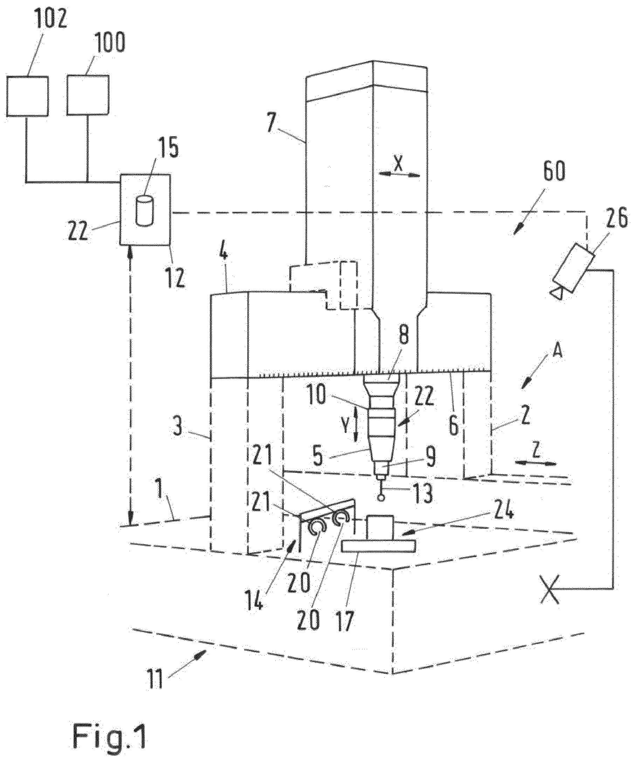

In Figur 1 ist eine erfindungsgemäße Anordnung 11 gezeigt, die ein Koordinatenmessgerät (KMG) 60 umfasst. Das KMG 60 dient allgemein dazu, ein Messobjekt 24 durch Erfassen dreidimensionaler Koordinaten ausgewählter Oberflächenpunkte zu vermessen.

In prinzipiell bekannter Weise ist das KMG 60 in Portalbauweise ausgebildet und umfasst einen Messtisch 1, dessen Oberfläche (also dessen einem Messsensor 9 zugewandte Seite/Oberfläche) eine Arbeitsfläche des KMG 60 ist. Über dem Messtisch 1 sind Säulen 2, 3 verfahrbar, die zusammen mit einem Querträger 4 ein Portal des KMG 60 bilden. Der Querträger 4 ist an seinen gegenüberliegenden Enden mit den Säulen 2 bzw. 3 verbunden, die auf dem Messtisch 1 längsverschieblich gelagert sind.

Der Querträger 4 ist mit einem Querschlitten 7 kombiniert, welcher zum Beispiel luftgelagert entlang dem Querträger 4 (in X-Richtung) beweglich ist. Die momentane Position des Querschlittens 7 relativ zu dem Querträger 4 kann anhand einer Maßstabsteilung 6 festgestellt werden. An dem Querschlitten 7 ist eine in vertikaler Richtung (also entlang einer Höhenachse Y) bewegliche Pinole 8 gelagert, die an ihrem unteren Ende über eine Sensorschnittstelle 10 (im gezeigten beispielhaften Zustand) mit einem taktilen Messsensor 9 verbunden ist.

Sämtliche der geschilderten Verfahrbewegungen bzw. Verschieblichkeiten werden durch nicht im Detail dargestellte lineare Bewegungsachsen ermöglicht, die jeweils wenigstens eine Antriebseinheit umfassen und deren mechanische Führungen entlang der dargestellten Pfeile X, Y, Z verlaufen.

Der Messsensor 9 umfasst einen Sensorkopf 5, der einen Taststift 13 trägt. Der Sensorkopf 5 enthält sensorische Einheiten, um Auslenkungen des Taststiftes 13 im Rahmen einer Objektantastung zu erfassen. Anstelle des taktilen Messsensors 9 könnte ebenso ein berührungslos abtastender (d.h. optischer) Messsensor vorgesehen sein, insbesondere ein Lasersensor (z.B. ein Weißlichtsensor).

Auf dem Messtisch 1 ist optional ein zusätzlicher drehbarer Drehtisch 17 angeordnet. Auf diesem ist das zu vermessende Messobjekt 24 angeordnet und durch Drehung des Drehtisches 17 um eine vertikale Drehachse drehbar. Ferner ist auf dem Messtisch 1 eine sehr schematisch dargestellte Aufnahmevorrichtung 14 angeordnet, in der z.B. verschiedene Taststifte 13 oder aber auch komplette taktile Messsensoren 9 samt Sensorkopf 5 anordenbar sind (jeweils nicht gezeigt), die gegen die entsprechende aktuell am KMG 60 angebrachten Einheiten ausgetauscht werden können. Auch optische Messsensoren 9 könnten dort aufgenommen sein. In dem gezeigten Beispiel bilden in der Aufnahmevorrichtung 14 aufgenommene (aber hier nicht dargestellte) Messensoren 9 bzw. etwaige Komponenten hiervon (also zum Beispiel der Sensorkopf 5 oder ein Taststift 13) einwechselbare Komponenten des Koordinatenmessgeräts 60.

Lediglich beispielhaft umfasst die Aufnahmevorrichtung 14 zwei Aufnahmebereiche 20. Diese weisen jeweils Öffnungsquerschnitte einer einseitig geöffneten kreis- oder ringförmigen Haltestruktur 21 auf. Jeder Aufnahmebereich 20 kann einen Messsensor 9 aufnehmen, vorzugsweise mit einer definierten Orientierung und/oder Ausrichtung und/oder allgemein formschlüssig. Auch wenn dies in der schematischen Darstellung von Figur 1 nur perspektivisch verzerrt abgebildet ist, sind die einzelnen Haltestrukturen 21 bzw. die Ebenen von deren Öffnungsquerschnitten parallel zur Messtischoberfläche ausgerichtet, d. h. verlaufen allgemein horizontal.

In an sich bekannter Weise ist das Koordinatenmessgerät 60 mit verschiedenen Messsensoren 9 wahlweise koppelbar, je nach auszuführender Messaufgabe. Ein aktuell zu verwendender Messsensor 9 kann über einen nicht gesondert einsehbaren Schnittstellenbereich 22 selektiv mit der Sensorschnittstelle 10 verbunden werden. Ein aktuell zwar angekoppelter, aber nicht weiter zu verwendender Messsensor 9 kann von der Sensorschnittstelle 10 gelöst und in einem freien Aufnahmebereich 20 der Aufnahmevorrichtung 14 abgelegt werden.

Ein Arbeitsraum A des KMG 60 enthält sämtliche Positionen, an denen Koordinatenmessungen durch das KMG 60 vornehmbar sind. Er kann durch sämtliche von der Sensorschnittstelle 10 und/oder einem aktuell daran angebrachten Messsensor 9 anfahrbaren (Mess-) Positionen aufgespannt werden. Lediglich beispielhaft erkennt man, dass der Arbeitsraum A quaderförimg ist und nahezu den gesamten (optional auch den gesamten) Messtisch 1 abdeckt. Weiter erstreckt er sich nach Maßgabe des Verfahrweges der Pinole 8 entlang der Höhenachse Y.

Ferner zeigt Fig. 1 schematisch eine Steueranordnung 12, die lediglich beispielhaft nur eine einzelne Steuereinrichtung umfasst, nämlich eine Steuereinrichtung 22 des KMG 60. Die Steuereinrichtung 22 ist ein Computer, der über einen Prozessor und zumindest einen Datenspeicher 15 verfügt. Die Steuereinrichtung 22 ist über Signal- und Steuerleitungen mit ansteuerbaren Komponenten des Koordinatenmessgerätes 60 verbunden, insbesondere mit den Antriebseinheiten der Bewegungsachsen. Außerdem ist die Steuereinrichtung 22 über eine Messdatenverbindung mit denjenigen Elementen des KMG 60 verbunden, die zur Ermittlung Messwerten eingesetzt werden. Da derartige Elemente und Einrichtungen auf dem Gebiet von Koordinatenmessgeräten 60 allgemein bekannt sind, wird hier nicht näher darauf eingegangen.

Die Steuereinrichtung 22 ist optional auch mit einer Anzeigeeinrichtung 100 verbunden, mit der einem Bediener zum Beispiel ermittelte Eigenschaften der Aufnahmevorrichtung 14 anzeigbar sind. Als weiteres optionales Merkmal ist eine Bedienschnittstelle 102 (zum Beispiel eine Tastatur oder eine Maus) vorgesehen, mit der der Bediener jegliche hierin geschilderten Eingaben tätigen kann, beispielsweise um ermittelte Eigenschaften zu verifizieren.

Die Anordnung 11 umfasst auch wenigstens einen Überwachungssensor 26. Hierbei handelt es sich beispielhaft um eine Digitalkamera, die datenübertragend mit der Steuereinrichtung 22 verbunden ist. Der Überwachungssensor 26 ist auf die Arbeitsfläche bzw. den Messtisch 1 ausgerichtet. Weiter weist der Überwachungssensor 26 einen Erfassungsbereich auf, der sich derart und zum Beispiel trichterförmig ausgehend von dem Überwachungssensor 26 aufweitet, dass er den Arbeitsraum A bevorzugt größtenteils oder auch vollständig erfassen kann. Folglich kann er auch eine Aufnahmevorrichtung 14 vollständig erfassen bzw. abbilden. Schematisch angedeutet ist, dass der Überwachungssensor 26 feststehend an dem Messtisch 1 montiert sein kann.

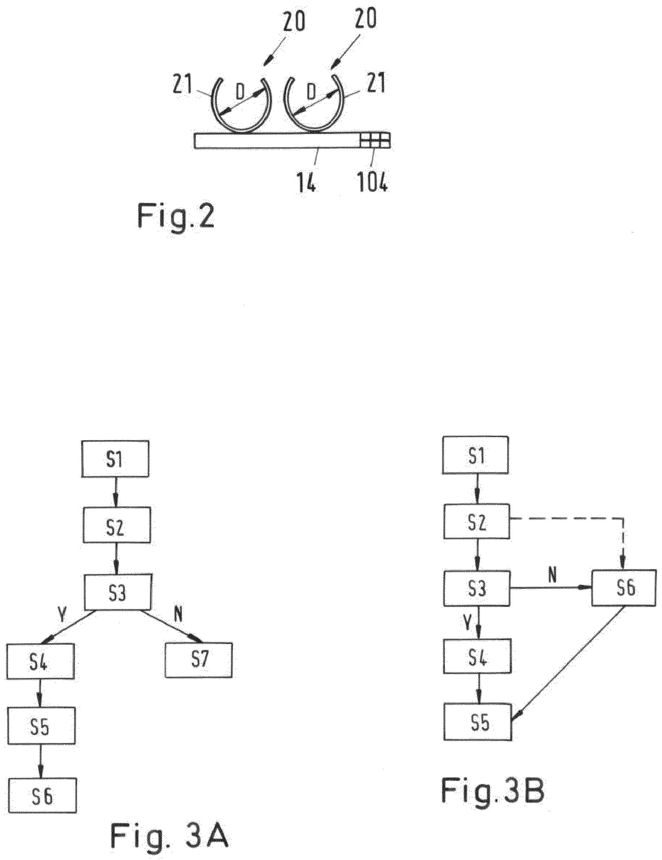

Beispielhaft kann ein Erfassen einzelner zweidimensionaler Bilder und zweidimensionaler Daten durch den Überwachungssensor 26 vorgesehen sein. Zur Erhöhung der verfügbaren Ansichten einer Aufnahmevorrichtung 14 können aber auch mehrere entsprechende Überwachungssensoren 26 vorgesehen sein oder wenigstens ein in unterschiedliche Stellungen relativ zum Arbeitsraum A bewegbarer Überwachungssensor 26. Alternativ und wie anhand der nachstehenden Figur 3B erläutert, kann aber auch wenigstens ein Überwachungssensor 26 vorgesehen sein, der Tiefeninformationen des Arbeitsraums A sowie einer darin positionieren Aufnahmevorrichtung 14 erfassen kann und folglich eine 3D-Erfassung vornimmt.

Im beispielhaften zweidimensionalen Fall erfasst der Überwachungssensor 26 Bildaufnahmen der Messtischoberfläche. Somit erfasst er auch die dort angeordnete Aufnahmevorrichtung 14 und das bevorzugt vollständig. Die Bildaufnahmen (oder auch Bilddateien) werden dann an die Steuereinrichtung 22 übermittelt. Diese führt zunächst eine Objekterkennung gemäß jeglicher der vorstehend geschilderten Varianten durch, um innerhalb der abgebildeten Bildinformationen einen Bereich zu ermitteln, der der Aufnahmevorrichtung 14 zuzuordnen ist. Genauer gesagt ermittelt die Steuereinrichtung 22 diejenigen Pixel innerhalb einer Pixelmatrix eines Bildes, die der Aufnahmevorrichtung 14 zuzuordnen sind. Je nach dem durchgeführten Verfahren zur Objekterkennung, können auch mehrere Überwachungssensoren 26 und/oder können zusätzliche Beleuchtungsquellen erforderlich sein.

Die Steuereinrichtung 22 ist auch dazu eingerichtet, als eine auf Basis der Arbeitsraumerfassung ermittelte Eigenschaft eine Position und/oder Orientierung der Aufnahmevorrichtung 14 und insbesondere von deren Aufnahmebereichen 20 und/oder eine räumliche Ausdehnung hiervon in wenigstens einer Raumebene zu bestimmen. Dies kann im Rahmen der Objekterkennung erfolgen, aber auch unabhängig hiervon auf Basis einer Bildaufnahme der Aufnahmevorrichtung 14 bzw. des Arbeitsraums A und/oder anhand einer nachstehend erläuterten Bestimmung dreidimensionaler Eigenschaften oder dem Erzeugen dreidimensionaler Modelle der Aufnahmevorrichtung 14.

In Figur 2 ist die Aufnahmevorrichtung 14 in Draufsicht, d. h. entlang der Y-Achse aus Figur 1 sowie mit Blickrichtung auf den Messtisch 1. Man erkennt erneut den einseitig offenen Öffnungsquerschnitt der Aufnahmebereiche 20 bzw. der Halter 21. Eine Abmessung D (zum Beispiel ein Durchmesser) der Öffnung bzw. dieses Querschnitts ist geringer gewählt als eine korrespondierende Abmessung eines darin aufnehmbaren Messsensors 9. Somit bildet eine dem Betrachter in Figur 2 zugewandte Oberseite der Halter 21 eine Anlagefläche, die mit einem Messsensor 9 in Kontakt treten und diesen dadurch halten kann. Dieses Funktionsprinzip ist aus dem Stand der Technik prinzipiell bekannt. Neuartig ist aber, dass mit der Erfassungsrichtung 26 die Aufnahmevorrichtung 14 und insbesondere die einzelnen Halter 21 bzw. Aufnahmebereiche 20 sensorisch erfasst wird/werden und darauf basierend Sensorwechselvorgänge gesteuert werden.

Als Einfahrrichtung in einen Aufnahmebereich 20 kommt entsprechend ein vertikales Absenken und zum Entnehmen ein vertikales Anheben von Messsensor 9 entlang der Y-Achse aus Figur 1 in Betracht. Prinzipiell möglich wäre auch ein horizontales Herausziehen bzw. Einschieben durch die geöffneten Seiten der Halter 21. Derartige Einfahrrichtungen können beispielsweise aus einer erkannten Position und Orientierung der Halter 21 automatisch von der Steueranordnung 12 bestimmt werden.

Der Vollständigkeit halber ist in Figur 2 auch ein optischer Marker 104 gezeigt, der Angaben zur Identität der Aufnahmevorrichtung 14 enthalten bzw. kodieren kann. Bei einer Entschlüsselung des Makers 104 kann die Steueranordnung 12 relevante Eigenschaften beispielsweise aus der Datenbank bzw. dem Datenspeicher 15 auslesen. Alternativ oder zusätzlich können zu bestimmende Eigenschaften auch als Informationen direkt in dem Marker 104 codiert sein.

Bezugnehmend auf die Figuren 3A-3B werden im Folgenden Ablaufschemata eines Verfahrens geschildert, die mit der Anordnung 11 aus Figur 1 ausführbar sind. Die Schrittfolgen stellen jeweils keine zwingende zeitliche Abfolge dar. Insbesondere können einzelne Schritte zumindest teilweise gleichzeitig oder in abweichender Reihenfolge ausgeführt werden. Sofern im Folgenden von einer automatischen Ausführung einzelner Schritte gesprochen wird, kann darunter eine Steuerung, Durchführung und/oder Veranlassung dieser Schritte durch die Steueranordnung 12 verstanden werden.

Im Folgenden werden anfängliche Erfassungen des Arbeitsraums A, bei denen dreidimensionale Eigenschaften und insbesondere Tiefeninformationen ermittelt werden, teils als 3D-Erfassungen bezeichnet. Erfassungen, bei denen dies nicht der Fall ist, werden teils als 2D- Erfassung bezeichnet.

Zunächst Bezug nehmend auf Figur 3A wird der Fall einer 2D-Erfassung geschildert. In einem Schritt S1, der zum Beispiel manuell initiiert werden kann aber anschließend automatisch ausgeführt wird, wird mit dem wenigstens einen Überwachungssensor 26 wenigstens eine Aufnahme von vorzugsweise dem gesamten Arbeitsraum A getätigt. Insbesondere ist aber die Aufnahmevorrichtung 14 vollständig in einem Erfassungsbereich und insbesondere einem Bildausschnitt des Überwachungssensors 26 enthalten.

Eine auf diese Weise erzeugte zweidimensionale Bilddatei, die die komplette Aufnahmevorrichtung 14 enthält bzw. entsprechend der Blickrichtung des Überwachungssensors 26 abbildet, wird an die Steueranordnung 12 übermittelt. Wie vorstehend geschildert, ist es auch aber möglich, mit einem bewegbaren Überwachungssensor 26 oder aber mit mehreren und beanstandet zueinander positionierten Überwachungssensoren 26 mehrere zweidimensionale Ansichten des Arbeitsraums A sowie der darin positionierten Aufnahmevorrichtung 14 zu erfassen.

Im Schritt S2 führt die Steueranordnung 12 eine Analyse der erhaltenen Bilddatei oder Bilddateien durch. Genauer gesagt führt sie eine Objekterkennung nach jeglichen der im allgemeinen Beschreibungsteil geschilderten Varianten durch. Als Ergebnis der Objekterkennung wird ein Bereich (insbesondere ein Pixelbereich) innerhalb eines aufgenommenen Bildes identifiziert, der der Aufnahmevorrichtung 14 zugeordnet ist bzw. diese abbildet oder enthält.

Im theoretischen Fall, dass mehrere derartige Bereiche ermittelt werden, d. h. mehrere Aufnahmevorrichtungen 14 erkannt werden, wird das Bild segmentiert und werden die einzelnen Segmente jeweils gemäß den nachstehend geschilderten Schritten weiterverarbeitet.

Als rein optionale Maßnahme und insbesondere im Anschluss an oder als ein Ergebnis der Objekterkennung kann für die erkannten Aufnahmevorrichtungen 14 eine zumindest zweidimensionale Position und vorzugsweise auch eine zweidimensionale Orientierung ermittelt werden (insbesondere im Maschinenkoordinatensystem). Hierbei ist es vorteilhaft, wenn der Überwachungssensor 26 in Bezug auf dieses Koordinatensystem kalibriert ist und folglich Pixeln in einem aufgenommenen Bild ein zumindest zweidimensionaler Ort im Arbeitsraum (zum Beispiel innerhalb einer parallel zum Messtischoberfläche 11 verlaufenden Ebene) zuordenbar ist.

Bevorzugt erfolgt ausgehend von der zweidimensionalen Arbeitsraumerfassung eine dreidimensionale Positions- und/oder Orientierungsermittlung spätestens dann, wenn in der nachstehend geschilderten Weise eine übereinstimmende Aufnahmevorrichtung mittels einer Datenbank ermittelt wurde. Insbesondere kann dann festgestellt werden, welche aufgenommene zweidimensionale Ansicht einer in der Datenbank hinterlegten Aufnahmevorrichtung von dem Überwachungssensor 26 erfasst wurde und kann daraus auf die tatsächliche Position und/oder Orientierung der Aufnahmevorrichtung 14 im Arbeitsraum A geschlossen werden. Auch in diesem Fall ist es aber zu bevorzugen, dass in der vorstehend geschilderten Weise sozusagen eine vorläufige Position und/oder Orientierung anhand der aufgenommenen 2D-Ansicht ermittelt wird. Diese kann dann als Referenz dienen, um in Anbetracht der bekannten Form und Ausdehnung der übereinstimmenden (hinterlegten) Aufnahmevorrichtung die tatsächliche dreidimensionale Position und/oder Orientierung der erfassten Aufnahmevorrichtung 14 zu ermitteln. Dieses Vorgehen kann dadurch erleichtert werden, dass im Schritt S1 (optional) mehrere zweidimensionale Ansichten der Aufnahmevorrichtung 14 erfasst werden.

Prinzipiell ist es gemäß einer allgemeinen Ausführungsform von Anordnung und Verfahren möglich, im Anschluss an eine zweidimensionale Erfassung eine dreidimensionale Erfassung von dann bevorzugt bereits erkannten Aufnahmevorrichtungen 14 durchzuführen. Dann könnte analog zum Vorgehen der nachstehend geschilderten Figur 3B mit dem Erzeugen oder Ermitteln dreidimensionaler Modelle der Aufnahmevorrichtung fortgesetzt werden.

Im vorliegenden Fall wird im Schritt S3 aber die Datenbank 15 verwendet, um zu überprüfen, ob die aufgenommene Ansicht einer der hinterlegten Aufnahmevorrichtungen zuordenbar ist. Dies wird von der Steueranordnung 12 automatisch ausgeführt und kann gemäß jeglicher der im allgemeinen Beschreibungsteil geschilderten Varianten durchgeführt werden. In diesem Fall verdeutlicht sich noch einmal der Vorteil einer Mehrzahl unterschiedlicher aufgenommener Ansichten, da hierdurch das Auffinden einer übereinstimmenden Aufnahmevorrichtung aus der Objektdatenbank 15 erleichtert wird.

Wurde eine übereinstimmende Aufnahmevorrichtung 14 aufgefunden (Pfeil Y), wird im Schritt S4 eine ebenfalls in der Datenbank 15 hinterlegte Eigenschaft automatisch identifiziert, beispielsweise die zur Verfügung stehende Abmessung D aus Figur 2, eine Anzahl von Aufnahmebereichen 20 oder eine Höhe der Aufnahmebereiche 20 über der Messtischoberfläche.

In einem Schritt S5, der auch vor oder parallel zu dem Schritt S4 ausgeführt werden könnte, werden als weitere Eigenschaften eine vollständige dreidimensionale Position und/oder Orientierung der Aufnahmevorrichtung 14 und insbesondere von deren Aufnahmebereichen 20 in dem betrachteten Koordinatensystem ermittelt. In diesem Fall kann aus der Ansicht der Aufnahmevorrichtung 14 im erfassten Kamerabild und in Kenntnis einer tatsächlichen Form und/oder dreidimensionaler Eigenschaften der Aufnahmevorrichtung 14, wie aus der Objektdatenbank 15 entnehmbar, auf eine Relativpositionierung von Überwachungssensor 26 und Aufnahmevorrichtung 14 geschlossen werden. Bei bekannter Position und Orientierung des Überwachungssensors 26 im betrachteten Koordinatensystem, kann dann die Position und Orientierung der Aufnahmevorrichtung 14 ermittelt werden. Eine Positionierung der Aufnahmebereiche 20 innerhalb der Aufnahmevorrichtung 14 (zum Beispiel relativ zu einem vorbestimmten Bezugspunkt) kann bekannt sein. Optional kann dies auch als eine gesonderte Eigenschaft in der hierin geschilderten Datenbank 15 hinterlegt sein.

Im Schritt S6 wird daraufhin eine Bewegungsabfolge zum Einführen und/oder Entnehmen von Messsensoren 9 in die Aufnahmevorrichtung 14 und insbesondere in deren einzelne Aufnahmebereiche 20 ermittelt. Dies erfolgt mittels im Stand der Technik gängiger Algorithmen zur Fahrwegsgenerierung.

Wurde hingegen keine übereinstimmende Aufnahmevorrichtung 14 im Schritt S3 ermittelt (Pfeil N), können verschiedene Maßnahmen zur Eigenschaftsermittlung ergriffen werden (Schritt S7). Beispielsweise kann dann ein Bediener aufgefordert werden, selbst nach einer etwaigen übereinstimmenden Aufnahmevorrichtung innerhalb der Datenbank 15 zu suchen. Alternativ kann der Bediener aufgefordert werden, gemäß bekannten bisherigen Verfahren die Aufnahmevorrichtung 14 manuell einzumessen. Ferner alternativ kann sozusagen nachträglich eine 3D-Erfassung der Aufnahmevorrichtung 14 vorgenommen werden und kann darauf basierend zu Eigenschaftsermittlung dreidimensionale Modelle der Aufnahmevorrichtung 14 erzeugt werden, wie dies nachstehend anhand von Figur 3B erläutert wird.

Dadurch, dass auf Basis einer aufwandsarmen 2D-Erfassung die Möglichkeit bereitgestellt wird, für Sensorwechselvorgänge relevante Eigenschaften größtenteils oder vollständig automatisch zu ermitteln, wird die Wahrscheinlichkeit reduziert, das manuelle Einmessungen der Aufnahmevorrichtung 14 erforderlich sind.

Bezugnehmend auf Figur 3B wird ein Ablauf erläutert, bei dem im Schritt S1 eine 3D-Erfassung eines bevorzugt überwiegenden Teils oder aber des gesamten Arbeitsraums A samt Aufnahmevorrichtung 14 mittels jeglicher hierin geschilderter Varianten erfolgt.

Im Schritt S2 findet dann wiederum eine Objekterkennung innerhalb des 3D-Datensatzes gemäß jeglicher hierin geschilderter Varianten statt. Erneut kann derjenige Bereich innerhalb des Datensatzes (zum Beispiel ein Satz von 3D-Pixeln), der mit einer erkannten Aufnahmevorrichtung 14 übereinstimmt, zusammengefasst, markiert und/oder gespeichert werden.

Im Rahmen von oder aber im Anschluss an Schritt S2 werden anhand der erfassten 3D-Daten einer erkannten Aufnahmevorrichtung 14 bevorzugt auch Informationen zu deren dreidimensionaler Position und/oder Orientierung in dem betrachteten Koordinatensystem ermittelt (in dem der Überwachungssensor 26 dann vorteilhafterweise kalibriert ist).

Prinzipiell kann nun direkt mit dem nachstehend geschilderten Schritt S6 fortgesetzt werden (sh. gestrichelter Pfeil), in dem anhand der erfassten 3D-Daten ein (virtuelles) Modell der Aufnahmevorrichtung 14 automatisch erzeugt wird. Dieses kann dann hinsichtlich zu bestimmender Eigenschaften weiterer analysiert werden, zum Beispiel um die Abmessungen der Halter 21 (siehe zum Beispiel D aus Figur 2) deren Relativabstände oder eine damit zusammenhängenden Einfahrrichtung zu bestimmen. Die erzielbare Güte ist hierbei aber maßgeblich von der Qualität der 3D-Erfassung abhängig.

Im vorliegenden Fall ist daher als eine bevorzugte Zwischenmaßnahme vorgesehen, im Schritt S3 analog zur Figur 3A zunächst zu überprüfen, ob in der Datenbank 15 eine übereinstimmendes Aufnahmevorrichtung 14 hinterlegt ist. Hierfür werden vorzugsweise die im Schritt S1 erfassten 3D-Daten verwendet. Es ist aber auch möglich, die bereits erwähnte Erzeugung eines virtuellen Modells durchzuführen und anhand dieses Modells zu versuchen, eine hierzu übereinstimmende Aufnahmevorrichtung 14 bzw. ein übereinstimmendes virtuelles Modell innerhalb der Datenbank 15 zu identifizieren.

Wurde eine Übereinstimmung ermittelt (Pfeil Y), werden im Schritt S4 dem übereinstimmenden Eintrag zugeordnete Eigenschaften anhand der Datenbank 15 ermittelt.

In einem Schritt S5 wird auf Basis dieser Eigenschaften eine an sich bekannte Bahnplanung für Sensorwechselvorgänge durchgeführt und dieser ggf. auch direkt ausgeführt.

Wird hingegen bei der Datenbanküberprüfung keine Übereinstimmung ermittelt (Pfeil N), kann gemäß dem geschilderten Schritt S6 ein virtuelles Modell erzeugt werden. Dieses kann dann zur Eigenschaftsermittlung analysiert und die ermittelten Eigenschaften können wiederum der Bahnplanung des Schritts S5 zugrunde gelegt werden.

## Patentansprüche

1. Verfahren zum Betreiben eines Koordinatenmessgeräts (60),
wobei eine Aufnahmevorrichtung (14) zur Aufnahme wenigstens einer einwechselbaren Komponente des Koordinatenmessgeräts (60) mit wenigstens einem Aufnahmebereich (20) für eine einwechselbare Komponente, die zur Einwechslung aus der Aufnahmevorrichtung (14) entnommen wird, bereitgestellt ist, insbesondere für einen Messsensor (9) oder eine Messsensorkomponente (5, 13), und das Verfahren aufweist:
- Erfassen eines zumindest überwiegenden Anteils der Aufnahmevorrichtung (14) mit einem optischen Überwachungssensor (26), der verschieden von einem für eine Werkstückvermessung verwendeten Messsensor (9) des Koordinatenmessgeräts (60) ist; wobei zumindest ein Bereich der Aufnahmevorrichtung (14) mit dem wenigstens einen Aufnahmebereich (20) erfasst wird,
- Ermitteln wenigstens einer vorbestimmten Eigenschaft der Aufnahmevorrichtung als Eigenschaft des wenigstens einen Aufnahmebereichs (20) auf Basis der Erfassung; wobei als Eigenschaft des wenigstens einen Aufnahmebereichs (20) eine Position und/oder Orientierung des Aufnahmebereichs (20) ermittelt wird,
- Durchführen eines Komponentenwechselvorgangs unter Berücksichtigung der ermittelten Eigenschaft.

2. Verfahren nach Anspruch 1,
**dadurch gekennzeichnet, dass** die Aufnahmevorrichtung (14) vollständig mit dem optischen Überwachungssensor (26) erfasst wird.

3. Verfahren nach Anspruch 1 oder 2,
**dadurch gekennzeichnet, dass** auf Basis der Erfassung wenigstens ein Datensatz erzeugt wird und die Eigenschaft basierend auf einer Ermittlung vorbestimmter geometrischer Merkmale in dem Datensatz ermittelt wird.

4. Verfahren nach Anspruch 3,
dass das Merkmal zumindest anteilig von dem wenigstens einen Aufnahmebereich (20) der Aufnahmevorrichtung (14) umfasst ist.

5. Verfahren nach einem der vorangehenden Ansprüche,
**dadurch gekennzeichnet, dass** die Eigenschaft des wenigstens einen Aufnahmebereichs (20) durch eine Mustererkennung ermittelt wird, wobei auf Basis der Erfassung wenigstens ein Datensatz erzeugt wird und die Eigenschaft basierend auf einer Suche nach vorbestimmten Merkmalen in dem Datensatz ermittelt wird, wobei die Suche mittels einer Mustererkennung erfolgt.

6. Verfahren nach einem der vorangehenden Ansprüche,
**dadurch gekennzeichnet, dass** als eine weitere Eigenschaft eine Einfahrrichtung in den zumindest einen Aufnahmebereich (20) der Aufnahmevorrichtung (14) ermittelt wird.

7. Verfahren nach einem der vorangehenden Ansprüche,
**dadurch gekennzeichnet, dass** als eine weitere Eigenschaft die Art der Aufnahmevorrichtung (14) ermittelt wird.

8. Verfahren nach einem der vorangehenden Ansprüche,
**dadurch gekennzeichnet, dass** als eine weitere Eigenschaft die Position und/oder Orientierung der Aufnahmevorrichtung (14) ermittelt wird.

9. Verfahren nach einem der vorangehenden Ansprüche,
**dadurch gekennzeichnet, dass** die Aufnahmevorrichtung (14) wenigstens einen optisch erfassbaren codierten Marker (104) aufweist und anhand eines Dekodierens des Markers (104) die wenigstens eine Eigenschaft ermittelt wird.

10. Verfahren nach einem der vorangehenden Ansprüche,
**dadurch gekennzeichnet, dass** auf Basis der Erfassung ein Vergleich mit einer Datenbank (15) durchgeführt wird, in der als Einträge Aufnahmevorrichtungen (14) und/oder Eigenschaften von Aufnahmevorrichtungen (14) hinterlegt sind.

11. Verfahren nach Anspruch 10,
**dadurch gekennzeichnet, dass** innerhalb der Datenbank (15) einer jeden Aufnahmevorrichtung (14) wenigstens eine Eigenschaft zugeordnet ist und dann, wenn im Rahmen des Vergleichs eine Übereinstimmung mit einem Eintrag der Datenbank (15) ermittelt wird, die zugeordnete Eigenschaft als Eigenschaft der sensorisch erfassten Aufnahmevorrichtung (14) ermittelt wird.

12. Verfahren nach einem der vorangehenden Ansprüche,
**dadurch gekennzeichnet, dass** einem Bediener mittels einer Anzeigevorrichtung (100) Ergebnisse der Erfassung und/oder Eigenschaftsermittlung anzeigbar sind und Vorgaben von dem Bediener bezüglich einer Fortsetzung des Verfahrens mittels einer Bedienschnittstelle (102) erfassbar sind.

13. Verfahren nach Anspruch 5, **dadurch gekennzeichnet, dass**
als Muster ein Umriss oder eine Öffnung des Aufnahmebereichs (20) ermittelt wird.

14. Verfahren nach Anspruch 13, **dadurch gekennzeichnet, dass**
der Umriss oder die Öffnung des Aufnahmebereichs (20) aus Blickrichtung des Überwachungssensors (26) ermittelt wird.

15. Anordnung (11), mit:
- einem Koordinatenmessgerät (60);
- wenigstens einer Aufnahmevorrichtung (14) für wenigstens eine einwechselbare Komponente des Koordinatenmessgeräts (60) mit wenigstens einem Aufnahmebereich (20) für eine einwechselbare Komponente, die zur Einwechslung aus der Aufnahmevorrichtung (14) entnommen wird, insbesondere für einen Messsensor (9) oder eine Messsensorkomponente (5, 13),
- wenigstens einen optischen Überwachungssensor (26), der dazu eingerichtet ist, zumindest einen überwiegenden Teil der Aufnahmevorrichtung (14) zu erfassen, und der verschieden von einem für eine Werkstückvermessung verwendeten Messsensor (9) des Koordinatenmessgeräts (60) ist, wobei zumindest ein Bereich der Aufnahmevorrichtung (14) mit dem wenigstens einen Aufnahmebereich (20) erfassbar ist; und
- einer Steueranordnung (12), die dazu eingerichtet ist, wenigstens eine vorbestimmte Eigenschaft der Aufnahmevorrichtung (14) als Eigenschaft des wenigstens einen Aufnahmebereichs (20) auf Basis der optischen Erfassung zu ermitteln, wobei als Eigenschaft des wenigstens einen Aufnahmebereichs (20) eine Position und/oder Orientierung des Aufnahmebereichs (20) ermittelt wird, wobei die Steueranordnung (12) ferner dazu eingerichtet ist, einen Komponentenwechselvorgang unter Berücksichtigung der ermittelten Eigenschaft durchzuführen.

## Claims

1. Method for operating a coordinate measuring machine (60),
wherein provision is made for a reception device (14) for receiving at least one exchangeable component of the coordinate measuring machine (60), having at least one reception area (20) for an exchangeable component that is removed from the reception device (14) for exchange purposes, in particular for a measuring sensor (9) or a measuring sensor component (5, 13), and the method comprises:
- detecting an at least predominant part of the reception device (14) by way of an optical monitoring sensor (26) that is different from a measuring sensor (9), used for a workpiece measurement, of the coordinate measuring machine (60); wherein at least one area of the reception device (14) comprising the at least one reception area (20) is detected,
- ascertaining at least one predetermined property of the reception device as a property of the at least one reception area (20) on the basis of the detection;
wherein a position and/or orientation of the reception area (20) is ascertained as a property of the at least one reception area (20),
- carrying out a component exchange process taking into consideration the ascertained property.

2. Method according to Claim 1,
**characterized in that** the reception device (14) is detected completely by way of the optical monitoring sensor (26).

3. Method according to Claim 1 or 2,
**characterized in that** at least one dataset is generated on the basis of the detection and the property is ascertained based on ascertaining predetermined geometric features in the dataset.

4. Method according to Claim 3,
**characterized in that** the feature is encompassed at least in part by the at least one reception area (20) of the reception device (14).

5. Method according to one of the preceding claims, **characterized in that** the property of the at least one reception area (20) is ascertained by pattern recognition, wherein at least one dataset is generated on the basis of the detection and the property is ascertained based on a search for predetermined features in the dataset, wherein the search is carried out by way of pattern recognition.

6. Method according to one of the preceding claims, **characterized in that** an entry direction into the at least one reception area (20) of the reception device (14) is ascertained as a further property.

7. Method according to one of the preceding claims, **characterized in that** the type of reception device (14) is ascertained as a further property.

8. Method according to one of the preceding claims, **characterized in that** the position and/or orientation of the reception device (14) is ascertained as a further property.

9. Method according to one of the preceding claims, **characterized in that** the reception device (14) has at least one optically detectable encoded marker (104) and the at least one property is ascertained based on decoding of the marker (104).

10. Method according to one of the preceding claims, **characterized in that** the detection is used as a basis to carry out a comparison with a database (15) storing reception devices (14) and/or properties of reception devices (14) as entries.

11. Method according to Claim 10,
**characterized in that** at least one property is assigned to each reception device (14) within the database (15) and, if a match with an entry in the database (15) is ascertained in the comparison, the assigned property is ascertained as a property of the reception device (14) detected by sensors.

12. Method according to one of the preceding claims, **characterized in that** results of the detection and/or ascertaining of properties are able to be displayed to an operator by way of a display device (100), and instructions from the operator with regard to continuing the method are able to be captured by way of an operator interface (102).

13. Method according to Claim 5, **characterized in that** an outline or an opening of the reception area (20) is ascertained as a pattern.

14. Method according to Claim 13, **characterized in that**
the outline or the opening of the reception area (20) is ascertained from the viewing direction of the monitoring sensor (26).

15. Arrangement (11), comprising:
- a coordinate measuring machine (60);
- at least one reception device (14) for at least one exchangeable component of the coordinate measuring machine (60), having at least one reception area (20) for an exchangeable component that is removed from the reception device (14) for exchange purposes, in particular for a measuring sensor (9) or a measuring sensor component (5, 13),
- at least one optical monitoring sensor (26) that is configured to detect at least a predominant part of the reception device (14) and that is different from a measuring sensor (9), used for a workpiece measurement, of the coordinate measuring machine (60), wherein at least one area of the reception device (14) comprising the at least one reception area (20) is able to be detected; and
- a control arrangement (12) that is configured to ascertain at least one predetermined property of the reception device (14) as a property of the at least one reception area (20) on the basis of the optical detection, wherein a position and/or orientation of the reception area (20) is ascertained as a property of the at least one reception area (20), wherein the control arrangement (12) is furthermore configured to carry out a component exchange process taking into consideration the ascertained property.

## Revendications

1. Procédé destiné à faire fonctionner un appareil de mesure de coordonnées (60),
un dispositif de réception (14) étant fourni pour recevoir au moins un composant interchangeable de l'appareil de mesure de coordonnées (60) avec au moins une zone de réception (20) pour un composant interchangeable, qui est retiré du dispositif de réception (14) pour être échangé, en particulier pour un capteur de mesure (9) ou un composant de capteur de mesure (5, 13), et le procédé comportant :
- détection d'une partie au moins majoritaire du dispositif de réception (14) avec un capteur de surveillance optique (26), qui est différent d'un capteur de mesure (9) de l'appareil de mesure de coordonnées (60) utilisé pour une mesure de la pièce à usiner ; au moins une zone du dispositif de réception (14) étant détectée avec au moins une zone de réception (20),
- détermination d'au moins une propriété prédéfinie du dispositif de réception en tant que propriété de l'au moins une zone de réception (20) sur la base de la détection ; une position et/ou une orientation de la zone de réception (20) étant déterminées en tant que propriété de l'au moins une zone de réception (20),
- réalisation d'une opération de changement de composant en tenant compte de la propriété déterminée.

2. Procédé selon la revendication 1,
**caractérisé en ce que** le dispositif de réception (14) est complètement détecté avec le capteur de surveillance optique (26).

3. Procédé selon la revendication 1 ou 2,
**caractérisé en ce qu'**au moins un ensemble de données est généré sur la base de la détection et la propriété est déterminée sur la base d'une détermination de caractéristiques géométriques prédéfinies dans l'ensemble de données.

4. Procédé selon la revendication 3,
**caractérisé en ce que** la caractéristique est comprise au moins proportionnellement par l'au moins une zone de réception (20) du dispositif de réception (14).

5. Procédé selon l'une des revendications précédentes,
**caractérisé en ce que** la propriété d'au moins une zone de réception (20) est déterminée par une reconnaissance de formes, au moins un ensemble de données étant généré sur la base de la détection et la propriété étant déterminée sur la base d'une recherche de caractéristiques prédéfinies dans l'ensemble de données, la recherche étant effectuée au moyen d'une reconnaissance de formes.

6. Procédé selon l'une des revendications précédentes,
**caractérisé en ce qu'**une direction d'entrée dans l'au moins une zone de réception (20) du dispositif de réception (14) est déterminée en tant qu'une propriété supplémentaire.

7. Procédé selon l'une des revendications précédentes,
**caractérisé en ce que** le type de dispositif de réception (14) est déterminé en tant qu'une propriété supplémentaire.

8. Procédé selon l'une des revendications précédentes,
**caractérisé en ce que** la position et/ou l'orientation du dispositif de réception (14) sont déterminées en tant qu'une propriété supplémentaire.

9. Procédé selon l'une des revendications précédentes,
**caractérisé en ce que** le dispositif de réception (14) comporte au moins un marqueur (104) codé détectable optiquement et l'au moins une propriété est déterminée à l'aide d'un décodage du marqueur (104).

10. Procédé selon l'une des revendications précédentes,
**caractérisé en ce qu'**est réalisée, sur la base de la détection, une comparaison à une base de données (15), dans laquelle des dispositifs de réception (14) et/ou des propriétés de dispositifs de réception (14) sont enregistrés en tant qu'entrées.

11. Procédé selon la revendication 10,
**caractérisé en ce qu'**au moins une propriété est associée dans la base de données (15) à chaque dispositif de réception (14), puis, lorsqu'une concordance avec une entrée de la base de données (15) est déterminée dans le cadre de la comparaison, la propriété associée est déterminée en tant que propriété du dispositif de réception (14) détecté par capteur.

12. Procédé selon l'une des revendications précédentes,
**caractérisé en ce que** des résultats de la détection et/ou de la détermination de propriété peuvent être affichés à un opérateur au moyen d'un dispositif d'affichage (100) et des spécifications de l'opérateur concernant une poursuite du procédé au moyen d'une interface d'utilisation (102) peuvent être détectées.

13. Procédé selon la revendication 5, **caractérisé en ce que**
un contour ou une ouverture de la zone de réception (20) est déterminé(e) en tant que motif.

14. Procédé selon la revendication 13, **caractérisé en ce que**
le contour ou l'ouverture de la zone de réception (20) est déterminé(e) à partir de la direction d'observation du capteur de surveillance (26).

15. Ensemble (11), avec :
- un appareil de mesure de coordonnées (60) ;
- au moins un dispositif de réception (14) pour au moins un composant interchangeable de l'appareil de mesure de coordonnées (60) avec au moins une zone de réception (20) pour un composant interchangeable, qui est retiré du dispositif de réception (14) pour être échangé, en particulier pour un capteur de mesure (9) ou un composant de capteur de mesure (5, 13),
- au moins un capteur de surveillance optique (26), qui est mis au point pour détecter au moins une majeure partie du dispositif de réception (14), et qui est différent d'un capteur de mesure (9) de l'appareil de mesure de coordonnées (60) utilisé pour la mesure de pièce à usiner, au moins une zone du dispositif de réception (14) pouvant être détectée avec au moins une zone de réception (20) ; et
- un ensemble de commande (12), qui est mis au point pour déterminer au moins une propriété prédéfinie du dispositif de réception (14) en tant que propriété de l'au moins une zone de réception (20) sur la base de la détection optique, une position et/ou une orientation de la zone de réception (20) étant déterminées en tant que propriété de l'au moins une zone de réception (20), l'ensemble de commande (12) étant en outre mis au point pour réaliser une opération de changement de composant en tenant compte de la propriété déterminée.
